# EUROPEAN PATENT APPLICATION

(11) **EP 4 799 838 A1**
(43) Date of publication of application: **02.09.2026**
(21) Application number: 24884917.6
(22) Date of filing: 31.10.2024
(51) Int. Cl.: B60K 1/04, B60L 53/80, H02J 7/14

(54) **VEHICLE-MOUNTED POWER SUPPLY, BATTERY SYSTEM OF VEHICLE, AND VEHICLE**

(30) Priority: 31.10.2023 CN 202311440192; 31.10.2023 CN 202311441466
(71) Applicant: BYD Company Limited, Shenzhen, Guangdong 518118 (CN)
(72) Inventor: LIN, Shuishan, Shenzhen, Guangdong 518118 (CN); WANG, Xinqiang, Shenzhen, Guangdong 518118 (CN); CAO, Dongkui, Shenzhen, Guangdong 518118 (CN); HUANG, Jian, Shenzhen, Guangdong 518118 (CN)
(74) Representative: Taor, Simon Edward William
(86) International application number: PCT/CN2024/128971
(87) International publication number: WO 2025/092918

(57) **Abstract**

A vehicle has a battery system that includes an on-board power supply. At least a part of apparatuses of the on-board power supply are detachably connected to a vehicle. The on-board power supply includes a first battery and an electrical energy conversion apparatus. The first battery is a non-power battery of a vehicle, and the first battery is configured to supply power to an external load when in a detached state. A first end of the electrical energy conversion apparatus is connected to the first battery. A second end of the electrical energy conversion apparatus is adapted to be connected to the external load. In the on-board power supply, the electrical energy conversion apparatus is configured to convert electrical energy from the first battery to supply power to the external load.

## Description

### CROSS-REFERENCES TO RELATED APPLICATIONS

This application claims priority to Chinese Patent Application No. 202311440192.3, filed on October 31, 2023 and entitled "ON-BOARD POWER SUPPLY, BATTERY SYSTEM OF VEHICLE, AND VEHICLE", which is incorporated herein by reference in its entirety for all purposes; and
this application claims priority to Chinese Patent Application No. 202311441466.0, filed on October 31, 2023 and entitled "ON-BOARD POWER SUPPLY, BATTERY SYSTEM OF VEHICLE, AND VEHICLE", which is incorporated herein by reference in its entirety for all purposes.

### TECHNICAL FIELD

The present disclosure relates to the field of electric vehicle technologies, and more specifically, to an on-board power supply, a battery system of a vehicle, and a vehicle.

### BACKGROUND

A related battery system of a vehicle is in an idle state and underutilized when not supplying power for a power load and/or a non-power load of the vehicle. When needing external power, a vehicle owner needs to find or provide additional power supply.

### SUMMARY

The present disclosure aims to provide new technical solutions of an on-board power supply.

According to a first aspect of the present disclosure, an on-board power supply is provided. At least a part of apparatuses of the on-board power supply are detachably connected to a vehicle. The on-board power supply includes:
a first battery, where the first battery is a non-power battery of the vehicle, and the first battery is configured to supply power to an external load when in a detached state; and
an electrical energy conversion apparatus, where a first end of the electrical energy conversion apparatus is connected to the first battery; a second end of the electrical energy conversion apparatus is adapted to be connected to the external load; and in the on-board power supply, the electrical energy conversion apparatus is configured to convert electrical energy from the first battery to supply power to the external load.

Optionally, the external load includes a first external load; the electrical energy conversion apparatus includes a first voltage conversion apparatus; a first end of the first voltage conversion apparatus is connected to the first battery; a second end of the first voltage conversion apparatus is adapted to be connected to the first external load; and in the on-board power supply, the first voltage conversion apparatus is configured to convert a voltage of the first battery and output a direct current to the first external load.

Optionally, the first voltage conversion apparatus includes a low-voltage output assembly of the vehicle, a first end of the low-voltage output assembly of the vehicle is connected to the first battery, and a second end of the low-voltage output assembly of the vehicle is adapted to be detachably connected to a non-power load of the vehicle.

Optionally, the first voltage conversion apparatus includes an external voltage conversion apparatus, a first end of the external voltage conversion apparatus is connected to the first battery, and a second end of the external voltage conversion apparatus is adapted to be connected to the first external load.

Optionally, the first voltage conversion apparatus includes:
a switch control circuit, where a first end of the switch control circuit is connected to the first battery; and
a voltage conversion circuit, where a first end of the voltage conversion circuit is connected to a second end of the switch control circuit, and a second end of the voltage conversion circuit is adapted to be connected to the first external load.

Optionally, the first battery is at least one of a storage battery, an iron battery, and a supercapacitor.

Optionally, the on-board power supply further includes a storage compartment, and the first battery and the first voltage conversion apparatus are accommodated in the storage compartment.

Optionally, the storage compartment is provided with a locking mechanism, and the locking mechanism is configured to open when an electrical connection between the on-board power supply and the vehicle is disconnected, to allow detachment of the on-board power supply.

Optionally, the storage compartment is provided with a low-voltage output interface, and a second end of the first voltage conversion apparatus is connected to the low-voltage output interface to output a direct current.

Optionally, the storage compartment is further provided with an electrical connection interface, the first battery is connected to the electrical connection interface, and the first battery is adapted to be electrically connected to the vehicle through the electrical connection interface.

Optionally, the external load includes a second external load; the electrical energy conversion apparatus includes an alternating current-direct current conversion apparatus; a first end of the alternating current-direct current conversion apparatus is connected to the first battery; a second end of the alternating current-direct current conversion apparatus is adapted to be connected to the second external load; and in the on-board power supply, the alternating current-direct current conversion apparatus is configured to convert a direct current from the first battery into an alternating current for the second external load.

Optionally, the alternating current-direct current conversion apparatus is an alternating current-direct current conversion apparatus of the vehicle; the alternating current-direct current conversion apparatus of the vehicle includes: a high-voltage DC/low-voltage DC converter, a high-voltage DC/DC converter, a high-voltage AC/DC converter, and an alternating current output assembly that are sequentially connected; and the high-voltage DC/low-voltage DC converter, the high-voltage DC/DC converter, the high-voltage AC/DC converter, and the alternating current output assembly are all vehicle apparatuses removable from the vehicle.

Optionally, the alternating current-direct current conversion apparatus includes a high-voltage DC/low-voltage DC converter, a high-voltage DC/DC converter, a high-voltage AC/DC converter, and an alternating current output assembly that are sequentially connected; and
the high-voltage DC/low-voltage DC converter, the high-voltage DC/DC converter, and the high-voltage AC/DC converter are all vehicle apparatuses removable from the vehicle; and the alternating current output assembly is an external apparatus.

Optionally, the high-voltage DC/low-voltage DC converter includes a first secondary conversion circuit, a first isolation conversion circuit, and a first primary conversion circuit;
the high-voltage DC/DC converter includes a second secondary conversion circuit, a second isolation conversion circuit, and a second primary conversion circuit;
the high-voltage AC/DC converter includes a power factor correction circuit;
the alternating current output assembly includes the switch control circuit; and
a first end of the first secondary conversion circuit is connected to the first battery, a second end of the first secondary conversion circuit is connected to a first end of the first isolation conversion circuit, a second end of the first isolation conversion circuit is connected to a first end of the first primary conversion circuit, a second end of the first primary conversion circuit is connected to a first end of the second secondary conversion circuit, a second end of the second secondary conversion circuit is connected to a first end of the second isolation conversion circuit, a second end of the second isolation conversion circuit is connected to a first end of the second primary conversion circuit, a second end of the second primary conversion circuit is connected to a first end of the power factor correction circuit, a second end of the power factor correction circuit is connected to the first end of the switch control circuit, and the second end of the switch control circuit is adapted to be connected to the second external load.

Optionally, the alternating current-direct current conversion apparatus includes a high-voltage DC/low-voltage DC converter, a high-voltage AC/DC converter, and an alternating current output assembly that are sequentially connected; and
the high-voltage DC/low-voltage DC converter, the high-voltage AC/DC converter, and the alternating current output assembly are all vehicle apparatuses removable from the vehicle.

Optionally, the high-voltage DC/low-voltage DC converter includes a first secondary conversion circuit, a first isolation conversion circuit, and a first primary conversion circuit that are sequentially connected;
the high-voltage AC/DC converter includes a power factor correction circuit;
the alternating current output assembly includes the switch control circuit; and
a first end of the first secondary conversion circuit is connected to the first battery, a second end of the first secondary conversion circuit is connected to a first end of the first isolation conversion circuit, a second end of the first isolation conversion circuit is connected to a first end of the first primary conversion circuit, a second end of the first primary conversion circuit is connected to a first end of the power factor correction circuit, a second end of the power factor correction circuit is connected to a first end of the switch control circuit, and the second end of the switch control circuit is adapted to be connected to the second external load.

Optionally, the alternating current-direct current conversion apparatus includes a high-voltage DC/low-voltage DC converter, and a high-voltage DC/AC converter that are connected to each other;
the high-voltage DC/low-voltage DC converter is a vehicle apparatus removable from the vehicle, and the high-voltage DC/AC converter is an external apparatus; and
a first end of the high-voltage DC/low-voltage DC converter is connected to the first battery, a second end of the high-voltage DC/low-voltage DC converter is connected to a first end of the high-voltage DC/AC converter, and a second end of the high-voltage DC/AC converter is connected to the second external load.

Optionally, the alternating current-direct current conversion apparatus includes the high-voltage DC/low-voltage DC converter, the high-voltage DC/AC converter, and the alternating current output assembly that are connected to each other;
the high-voltage DC/low-voltage DC converter is a vehicle apparatus removable from the vehicle, and the high-voltage DC/AC converter and the alternating current output assembly are both external apparatuses; and
the first end of the high-voltage DC/low-voltage DC converter is connected to the first battery, the second end of the high-voltage DC/low-voltage DC converter is connected to the first end of the high-voltage DC/AC converter, the second end of the high-voltage DC/AC converter is connected to a first end of the alternating current output assembly, and a second end of the alternating current output assembly is connected to the second external load.

Optionally, the alternating current-direct current conversion apparatus is an external alternating current-direct current conversion apparatus, and the external alternating current-direct current conversion apparatus includes the high-voltage DC/AC converter or a low-voltage DC/AC converter;
the first end of the high-voltage DC/AC converter is connected to the first battery, and the second end of the high-voltage DC/AC converter is connected to the second external load; and
a first end of the low-voltage DC/AC converter is connected to the first battery, and a second end of the low-voltage DC/AC converter is connected to the second external load.

Optionally, the first battery is at least one of a storage battery, an iron battery, and a supercapacitor.

Optionally, the on-board power supply further includes the storage compartment, and the first battery and the alternating current-direct current conversion apparatus are accommodated in the storage compartment.

Optionally, the storage compartment is provided with a locking mechanism, and the locking mechanism is configured to open when an electrical connection between the on-board power supply and the vehicle is disconnected, to allow detachment of the on-board power supply.

Optionally, the storage compartment is provided with an alternating current output interface, and the second end of the alternating current-direct current conversion apparatus is connected to the alternating current output interface to output an alternating current.

Optionally, the storage compartment is further provided with an electrical connection interface, the first battery is connected to the electrical connection interface, and the first battery is adapted to be electrically connected to the vehicle through the electrical connection interface.

According to a second aspect of the present disclosure, a battery system of a vehicle is provided. The battery system includes:
a power battery assembly; and
the on-board power supply according to any one of the implementations.

Optionally, the battery system further includes: a second voltage conversion apparatus, where a first end of the second voltage conversion apparatus is connected to the power battery assembly and is configured to convert a voltage output by the power battery assembly; and
the on-board power supply according to any one of the possible implementations of the first aspect, where the on-board power supply is connected to a second end of the second voltage conversion apparatus.

Optionally, the second voltage conversion apparatus includes:
the high-voltage DC/low-voltage DC converter, where the high-voltage DC/low-voltage DC converter includes the first primary conversion circuit, the first isolation conversion circuit, and the first secondary conversion circuit; and
the first end of the first primary conversion circuit is connected to the power battery assembly, the second end of the first primary conversion circuit is connected to the first end of the first isolation conversion circuit, the second end of the first isolation conversion circuit is connected to the first end of the first secondary conversion circuit, and the second end of the first secondary conversion circuit is connected to the on-board power supply.

Optionally, the battery system further includes:
the alternating current-direct current conversion apparatus, where the first end of the alternating current-direct current conversion apparatus is connected to the power battery assembly, and the second end of the alternating current-direct current conversion apparatus is connected to an alternating current electrical load; and
the alternating current-direct current conversion apparatus includes the high-voltage DC/DC converter, the high-voltage AC/DC converter, and the alternating current output assembly that are sequentially connected.

Optionally, the high-voltage DC/DC converter includes a second secondary conversion circuit, a second isolation conversion circuit, and a second primary conversion circuit;
the high-voltage AC/DC converter includes a power factor correction circuit;
the alternating current output assembly includes the switch control circuit; and
the first end of the second secondary conversion circuit is connected to the power battery assembly, the second end of the second secondary conversion circuit is connected to the first end of the second isolation conversion circuit, the second end of the second isolation conversion circuit is connected to the first end of the second primary conversion circuit, the second end of the second primary conversion circuit is connected to the first end of the power factor correction circuit, the second end of the power factor correction circuit is connected to the first end of the switch control circuit, and the switch control circuit is connected to the alternating current electrical load.

Optionally, the battery system further includes:
a second battery, where a first end of the second battery is connected to the second voltage conversion apparatus, a second end of the second battery is adapted to be connected to the non-power load of the vehicle, and the second battery is configured to supply power to the non-power load of the vehicle when the on-board power supply is in a detached state.

Optionally, the battery system further includes:
an auxiliary power supply DC converter, where a first end of the auxiliary power supply DC converter is connected to the power battery assembly through the switch control circuit; a second end of the auxiliary power supply DC converter is connected to the non-power load of the vehicle; and the auxiliary power supply DC converter is configured to supply power to the non-power load of the vehicle when the on-board power supply is in a detached state.

Optionally, the auxiliary power supply DC converter includes: a third primary conversion circuit, a third isolation conversion circuit, and a third secondary conversion circuit, where
a first end of the third primary conversion circuit is connected to the power battery assembly, a second end of the third primary conversion circuit is connected to a first end of the third isolation conversion circuit, a second end of the third isolation conversion circuit is connected to a first end of the third secondary conversion circuit, and a second end of the third secondary conversion circuit is connected to the non-power load of the vehicle.

Optionally, the power battery assembly is connected to the first battery through the high-voltage DC/low-voltage DC converter.

Optionally, the battery system further includes:
a second battery, where a first end of the second battery is connected to the alternating current-direct current conversion apparatus, a second end of the second battery is adapted to be connected to the non-power load of the vehicle, and the second battery is configured to supply power to the non-power load of the vehicle when the on-board power supply is in a detached state.

Optionally, the battery system further includes:
an auxiliary power supply DC converter, where a first end of the auxiliary power supply DC converter is connected to the power battery assembly through the switch control circuit; a second end of the auxiliary power supply DC converter is connected to the non-power load of the vehicle; and the auxiliary power supply DC converter is configured to supply power to the non-power load of the vehicle when the on-board power supply is in a detached state.

Optionally, the auxiliary power supply DC converter includes: a third primary conversion circuit, a third isolation conversion circuit, and a third secondary conversion circuit, where
a first end of the third primary conversion circuit is connected to the power battery assembly, a second end of the third primary conversion circuit is connected to a first end of the third isolation conversion circuit, a second end of the third isolation conversion circuit is connected to a first end of the third secondary conversion circuit, and a second end of the third secondary conversion circuit is connected to the non-power load of the vehicle.

According to a third aspect of the present disclosure, a vehicle is provided, including the battery system according to any implementation of the second aspect.

In the on-board power supply provided in the present disclosure, the non-power battery in the battery system of the vehicle may be detached from the vehicle, and forms a portable power supply with the electrical energy conversion apparatus. The electrical energy conversion apparatus may convert the electrical energy from the non-power battery to supply power to the second external load. In this way, the battery system of the vehicle is fully utilized when in an idle state, and an external direct current power requirement of a vehicle owner is met, thereby improving vehicle use experience of the vehicle owner.

In the on-board power supply provided in the present disclosure, the non-power battery in the battery system of the vehicle may be detached from the vehicle, and forms a portable power supply with the voltage conversion apparatus. The voltage conversion apparatus may convert the voltage of the non-power battery and output the direct current to the first external load. In this way, the battery system of the vehicle is fully utilized when in an idle state, and the external direct current power requirement of the vehicle owner is met, thereby improving the vehicle use experience of the vehicle owner.

In the on-board power supply provided in the present disclosure, the non-power battery in the battery system of the vehicle may be detached from the vehicle, and forms a portable power supply with the alternating current conversion apparatus. The alternating current-direct current conversion apparatus may convert the direct current from the non-power battery into the alternating current for the second external load. In this way, the battery system of the vehicle is fully utilized when in an idle state, and an external alternating current power requirement of the vehicle owner is met, thereby improving the vehicle use experience of the vehicle owner.

According to the following detailed description of example embodiments of this specification with reference to the accompanying drawings, other features and advantages of embodiments of this specification become clear.

### BRIEF DESCRIPTION OF DRAWINGS

The accompanying drawings incorporated into this specification and constituting a part of this specification show embodiments of this specification, and are used, together with descriptions of the accompanying drawings, to explain the principles of embodiments of this specification.
FIG. 1 is a block diagram of a structure of an on-board power supply according to an embodiment of the present disclosure;
FIG. 2 is a block diagram of a structure of an on-board power supply according to an embodiment of the present disclosure;
FIG. 3 is a diagram of a battery system of a vehicle with a non-power battery detached from the battery system;
FIG. 4 is a block diagram of a structure of an on-board power supply according to an embodiment of the present disclosure;
FIG. 5 is a diagram of a battery system of a vehicle with a non-power battery and a low-voltage output assembly detached from the battery system;
FIG. 6 is a block diagram of a structure of an on-board power supply according to an embodiment of the present disclosure;
FIG. 7 is a block diagram of a structure of a battery system of a vehicle according to an embodiment of the present disclosure;
FIG. 8 is a schematic of a circuit of a high-voltage DC/low-voltage DC converter according to an embodiment of the present disclosure;
FIG. 9 is a block diagram of a structure of a battery system of a vehicle according to an embodiment of the present disclosure;
FIG. 10 is a schematic of a circuit of a high-voltage DC/DC converter according to an embodiment of the present disclosure;
FIG. 11 is a block diagram of a structure of a battery system of a vehicle according to an embodiment of the present disclosure;
FIG. 12 is a block diagram of a structure of a battery system of a vehicle according to an embodiment of the present disclosure;
FIG. 13 is a block diagram of a structure of a battery system of a vehicle according to an embodiment of the present disclosure;
FIG. 14 is a block diagram of a structure of a storage compartment according to an embodiment of the present disclosure;
FIG. 15 is a block diagram of a structure of an auxiliary power supply DC converter according to an embodiment of the present disclosure;
FIG. 16 is a block diagram of a structure of an on-board power supply according to an embodiment of the present disclosure;
FIG. 17 is a block diagram of a structure of an on-board power supply according to an embodiment of the present disclosure;
FIG. 18 is a diagram of a battery system of a vehicle with a non-power battery and an alternating current-direct current conversion apparatus detached from the battery system;
FIG. 19 is a schematic of a circuit of a high-voltage DC/low-voltage DC converter, a high-voltage DC/DC converter, and a high-voltage AC/DC converter according to an embodiment of the present disclosure;
FIG. 20 is a block diagram of a structure of an on-board power supply according to an embodiment of the present disclosure;
FIG. 21 is a diagram of a battery system of a vehicle with a part of structures of both a non-power battery and an alternating current-direct current conversion apparatus detached from the battery system;
FIG. 22 is a block diagram of a structure of an on-board power supply according to an embodiment of the present disclosure;
FIG. 23 is a diagram of a battery system of a vehicle with a part of structures of both a non-power battery and an alternating current-direct current conversion apparatus detached from the battery system;
FIG. 24 is a block diagram of a structure of an on-board power supply according to an embodiment of the present disclosure;
FIG. 25 is a diagram of a battery system of a vehicle with a non-power battery and a high-voltage DC/low-voltage DC converter detached from the battery system;
FIG. 26 is a block diagram of a structure of an on-board power supply according to an embodiment of the present disclosure;
FIG. 27 is a block diagram of a structure of a battery system of a vehicle according to an embodiment of the present disclosure;
FIG. 28 is a block diagram of a structure of a battery system of a vehicle according to an embodiment of the present disclosure;
FIG. 29 is a block diagram of a structure of a battery system of a vehicle according to an embodiment of the present disclosure;
FIG. 30 is a block diagram of a structure of a battery system of a vehicle according to an embodiment of the present disclosure; and
FIG. 31 is a block diagram of a structure of a battery system of a vehicle according to an embodiment of the present disclosure.

### Reference numeral:

100: on-board power supply;
101: first battery;
102: electrical energy conversion apparatus;
103: first voltage conversion apparatus;
104: low-voltage output assembly;
105: external voltage conversion apparatus;
106: switch control circuit;
107: voltage conversion circuit;
108: storage compartment;
109: locking mechanism;
110: low-voltage output interface;
111: electrical connection interface;
112: alternating current-direct current conversion apparatus;
113: high-voltage DC/low-voltage DC converter;
114: high-voltage DC/DC converter;
115: high-voltage AC/DC converter;
116: alternating current output assembly;
117: first secondary conversion circuit;
118: first isolation conversion circuit;
119: first primary conversion circuit;
120: second secondary conversion circuit;
121: second isolation conversion circuit;
122: second primary conversion circuit;
123: power factor correction circuit;
200: battery system;
201: power battery assembly;
202: auxiliary power supply DC converter
203: third primary conversion circuit;
204: third isolation conversion circuit;
205: third secondary conversion circuit;
206: second voltage conversion apparatus;
207: second battery.

### DETAILED DESCRIPTION OF PREFERRED EMBODIMENTS

Example embodiments of this specification are described in detail with reference to the accompanying drawings.

The following description of at least one example embodiment is merely illustrative and shall not be construed as any limitation to embodiments of this specification, and application or use thereof.

It should be noted that similar reference numerals and letters indicate similar items in the following accompanying drawings. Therefore, once an item is defined in one accompanying drawing, the item does not need to be further discussed in subsequent accompanying drawings.

### <Embodiments of an on-board power supply>

### Embodiment 1

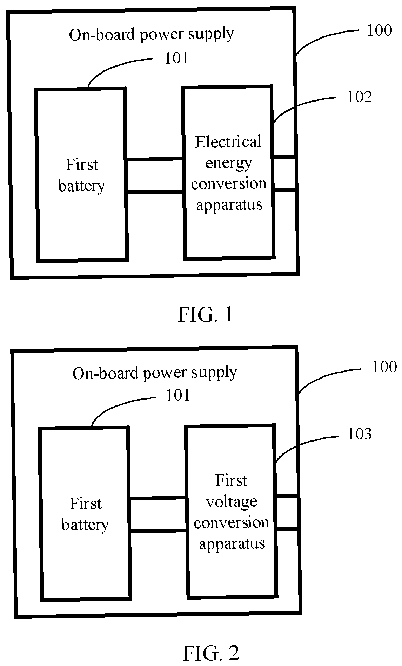

Refer to FIG. 1. An embodiment of the present disclosure provides an on-board power supply 100. At least a part of apparatuses of the on-board power supply 100 are detachably connected to a vehicle. As shown in FIG. 1, the on-board power supply 100 in this embodiment includes a first battery 101 and an electrical energy conversion apparatus 102. The first battery 101 is configured to supply power to an external load when in a detached state. A first end of the electrical energy conversion apparatus 102 is connected to the first battery 101. A second end of the electrical energy conversion apparatus 102 is adapted to be connected to the external load. In the on-board power supply 100, the electrical energy conversion apparatus 102 is configured to convert electrical energy from the first battery 101 to supply power to the external load.

### Embodiment 2

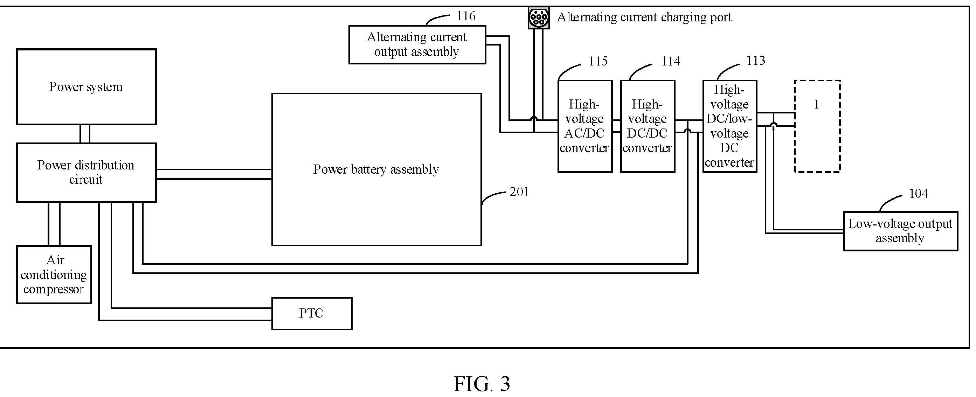

A first battery 101 is a non-power battery of a vehicle. The first battery 101 is configured to supply power to an external load when in a detached state. FIG. 3 is a diagram of a battery system 200 of a vehicle with a non-power battery detached from the battery system 200. A location of a dashed box 1 is a position of the non-power battery in the battery system 200 of the vehicle.

Refer to FIG. 2. The external load includes a first external load, and an electrical energy conversion apparatus 102 includes a first voltage conversion apparatus 103. A first end of the first voltage conversion apparatus 103 is connected to the first battery 101, and a second end of the first voltage conversion apparatus 103 is adapted to be connected to the first external load. In an on-board power supply 100, the first voltage conversion apparatus 103 is configured to convert a voltage of the first battery 101 and output a direct current to the first external load.

In an embodiment, the first external load is a direct current electrical load.

In the on-board power supply 100 provided in this embodiment, the non-power battery in the battery system 200 of the vehicle may be detached from the vehicle, and forms a portable power supply with the voltage conversion apparatus. The voltage conversion apparatus may convert a voltage of the non-power battery and output the direct current to the first external load. In this way, the battery system 200 of the vehicle is fully utilized when in an idle state, and an external direct current power requirement of a vehicle owner is met, thereby improving vehicle use experience of the vehicle owner.

In an embodiment, the first battery 101 is at least one of a storage battery, an iron battery, and a supercapacitor.

In an embodiment, the first voltage conversion apparatus 103 includes a switch control circuit 106 and a voltage conversion circuit 107. A first end of the switch control circuit 106 is connected to the first battery 101. A first end of the voltage conversion circuit 107 is connected to a second end of the switch control circuit 106. A second end of the voltage conversion circuit 107 is adapted to be connected to the first external load.

The first voltage conversion apparatus 103 may buck the voltage of the first battery 101 and output a direct current to the first external load, or may boost the voltage of the first battery 101 and output a direct current to the first external load.

For example, the voltage of the first battery 101 is 12 V, and the first voltage conversion apparatus 103 is configured to convert 12 V from the non-power battery to 5 V, to supply power to a load whose supply voltage is 5 V.

For another example, the voltage of the first battery 101 is 12 V, and the first voltage conversion apparatus 103 is configured to convert 12 V from the non-power battery to 24 V, to supply power to a load whose power supply voltage is 24 V.

The first voltage conversion apparatus 103 includes one control switch and one voltage conversion circuit 107. In this case, the first voltage conversion apparatus 103 is configured to convert the voltage of the non-power battery into a corresponding supply voltage.

The first voltage conversion apparatus 103 includes a plurality of switch control circuits 106 and a plurality of voltage conversion circuits 107. Each switch control circuit 106 and a corresponding voltage conversion circuit 107 form one branch. A first end of each branch is connected to the first battery 101, and a second end of each branch is connected to a corresponding first external load. In this case, the first voltage conversion apparatus 103 is configured to convert the voltage of the non-power battery into different supply voltages separately, and supply power to loads with different supply voltages.

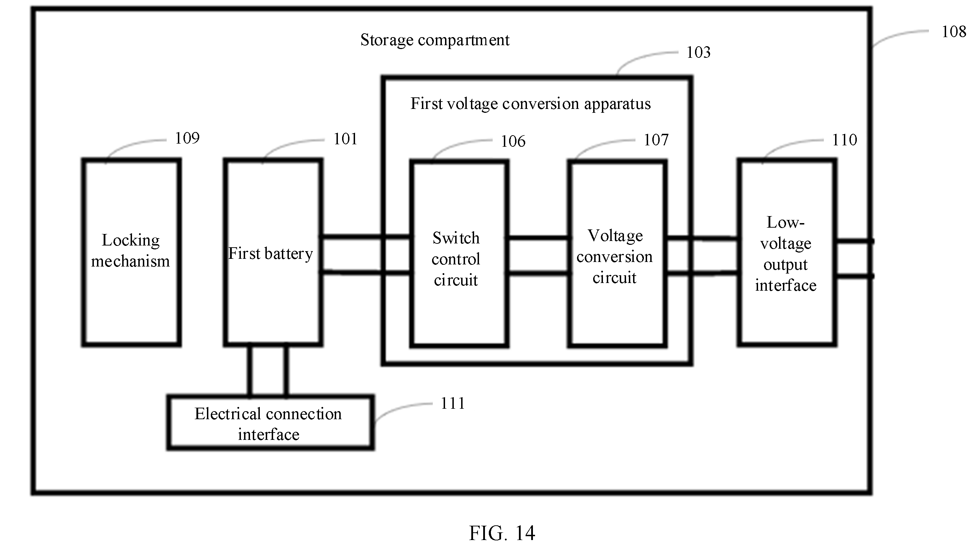

In an embodiment, refer to FIG. 14. The on-board power supply 100 further includes a storage compartment 108. The first battery 101 and the first voltage conversion apparatus 103 are accommodated in the storage compartment 108.

Refer to FIG. 14. The storage compartment 108 is provided with a locking mechanism 109. The locking mechanism 109 is configured to open when an electrical connection between the on-board power supply 100 and the vehicle is disconnected, to allow detachment of the on-board power supply 100.

Refer to FIG. 14. The storage compartment 108 is provided with a low-voltage output interface 110. The second end of the first voltage conversion apparatus 103 is connected to the low-voltage output interface 110 to output a direct current. The storage compartment 108 is further provided with an electrical connection interface 111, the first battery 101 is connected to the electrical connection interface 111, and the first battery 101 is adapted to be electrically connected to the vehicle through the electrical connection interface 111.

### Embodiment 3

In an embodiment, a first battery 101 is a power battery of a vehicle. A first voltage conversion apparatus 103 includes a low-voltage output assembly 104 of the vehicle.

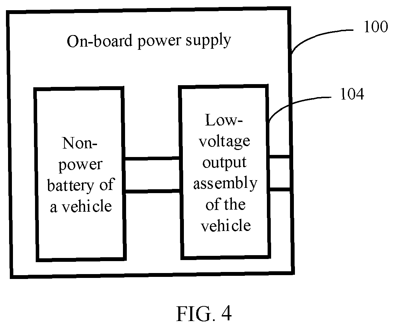

Refer to FIG. 4. An on-board power supply 100 in this embodiment includes the non-power battery of the vehicle and a low-voltage output assembly 104 of the vehicle.

In the on-board power supply 100, a first end of the low-voltage output assembly 104 of the vehicle is connected to the non-power battery of the vehicle, and a second end of the low-voltage output assembly 104 of the vehicle is adapted to be connected to a first external load.

In the vehicle, the first end of the low-voltage output assembly 104 of the vehicle is connected to the non-power battery of the vehicle, and the second end of the low-voltage output assembly 104 of the vehicle is adapted to be detachably connected to a non-power load of the vehicle.

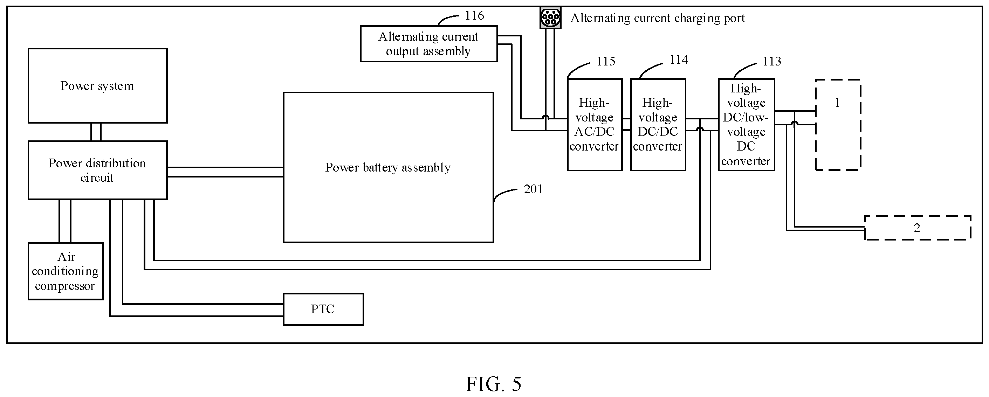

FIG. 5 is a diagram of a battery system 200 of a vehicle with a non-power battery and a low-voltage output assembly 104 detached from the battery system 200. A location of a dashed box 1 is a position of the non-power battery in the battery system 200 of the vehicle. A location of a dashed box 2 is a position of the low-voltage output assembly 104 in the battery system 200 of the vehicle.

In this embodiment, the low-voltage output assembly 104 of the vehicle includes a switch control circuit 106 and a voltage conversion circuit 107. A first end of the switch control circuit 106 is connected to the non-power battery of the vehicle. A first end of the voltage conversion circuit 107 is connected to a second end of the switch control circuit 106. In the on-board power supply 100, a second end of the voltage conversion circuit 107 is adapted to be connected to the first external load. In the vehicle, the second end of the voltage conversion circuit 107 is adapted to be connected to the non-power load of the vehicle.

The low-voltage output assembly 104 of the vehicle includes one control switch and one voltage conversion circuit 107.

The low-voltage output assembly 104 includes a plurality of switch control circuits 106 and a plurality of voltage conversion circuits 107. Each switch control circuit 106 and a corresponding voltage conversion circuit 107 form one branch. A first end of each branch is connected to the non-power battery of the vehicle, and a second end of each branch is connected to a corresponding first external load. In this case, the low-voltage output assembly 104 of the vehicle is configured to convert a voltage of the non-power battery into different supply voltages separately, and supply power to loads with different supply voltages.

The on-board power supply 100 further includes a storage compartment 108. The non-power battery of the vehicle and the low-voltage output assembly 104 of the vehicle are accommodated in the storage compartment 108.

Refer to FIG. 14. The storage compartment 108 is provided with a locking mechanism 109. The locking mechanism 109 is configured to open when an electrical connection between the on-board power supply 100 and the vehicle is disconnected, to allow detachment of the on-board power supply 100.

Refer to FIG. 14. The storage compartment 108 is provided with a low-voltage output interface 110. A second end of the low-voltage output assembly 104 of the vehicle is connected to the low-voltage output interface 110 to output a direct current.

Refer to FIG. 14. The storage compartment 108 is further provided with an electrical connection interface 111. The non-power battery of the vehicle is connected to the electrical connection interface 111. The non-power battery of the vehicle is adapted to be electrically connected to the vehicle through the electrical connection interface 111.

In the on-board power supply 100 provided in this embodiment, both the non-power battery and the voltage conversion apparatus in the battery system 200 of the vehicle may be detached from the vehicle, and form a portable power supply. The voltage conversion apparatus may convert the voltage of the non-power battery and output a direct current to the first external load. In this way, the battery system 200 of the vehicle is fully utilized when in an idle state, and an external direct current power requirement of a vehicle owner is met, thereby improving vehicle use experience of the vehicle owner.

### Embodiment 4

In an embodiment, a first battery 101 is a non-power battery of a vehicle, and a first voltage conversion apparatus 103 includes an external voltage conversion apparatus 105.

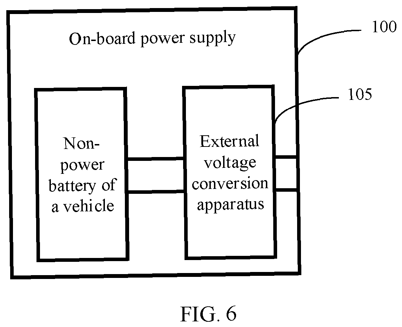

Refer to FIG. 6. An on-board power supply 100 in this embodiment includes the non-power battery of the vehicle and the external voltage conversion apparatus 105.

In the on-board power supply 100, a first end of the external voltage conversion apparatus 105 is connected to the non-power battery of the vehicle, and a second end of the external voltage conversion apparatus 105 is adapted to be connected to a first external load.

In this embodiment, the external voltage conversion apparatus 105 includes a switch control circuit 106 and a voltage conversion circuit 107. A first end of the switch control circuit 106 is connected to the non-power battery of the vehicle. A first end of the voltage conversion circuit 107 is connected to a second end of the switch control circuit 106. In the on-board power supply 100, a second end of the voltage conversion circuit 107 is adapted to be connected to the first external load.

The external voltage conversion apparatus 105 includes one control switch and one voltage conversion circuit 107.

The external voltage conversion apparatus 105 includes a plurality of switch control circuits 106 and a plurality of voltage conversion circuits 107. Each switch control circuit 106 and a corresponding voltage conversion circuit 107 form one branch. A first end of each branch is connected to the non-power battery of the vehicle, and a second end of each branch is connected to a corresponding first external load. In this case, the external voltage conversion apparatus 105 is configured to convert a voltage of the non-power battery into different supply voltages separately, and supply power to loads with different supply voltages.

Refer to FIG. 14. The on-board power supply 100 further includes a storage compartment 108. The non-power battery of the vehicle is accommodated in the storage compartment 108.

Refer to FIG. 14. The storage compartment 108 is provided with a locking mechanism 109. The locking mechanism 109 is configured to open when an electrical connection between the vehicle and the non-power battery of the vehicle is disconnected, to allow detachment of the non-power battery of the vehicle.

The storage compartment 108 is provided with a first electrical connection interface 111 and a second electrical connection interface 111. The non-power battery of the vehicle is connected to the vehicle through the first electrical connection interface 111. The non-power battery of the vehicle is connected to the external voltage conversion apparatus 105 through the second electrical connection interface 111.

In the on-board power supply 100 provided in this embodiment, the non-power battery in a battery system 200 of the vehicle may be detached from the vehicle, and forms a portable power supply with the external voltage conversion apparatus 105. The external voltage conversion apparatus 105 may convert the voltage of the non-power battery and output a direct current to the first external load. In this way, the non-power battery of the vehicle is fully utilized when in an idle state, and an external power requirement of a vehicle owner is met, thereby improving vehicle use experience of the vehicle owner.

### Embodiment 5

In an embodiment, an on-board power supply 100 includes a first battery 101, a first voltage conversion apparatus 103, and an alternating current-direct current conversion apparatus 112. For the first battery 101 and the first voltage conversion apparatus 103, refer to any one of the foregoing embodiments. Details are not described herein again.

A first end of the alternating current-direct current conversion apparatus 112 is connected to the first battery 101, and a second end of the alternating current-direct current conversion apparatus 112 is adapted to be connected to a first external load. In the on-board power supply 100, the alternating current-direct current conversion apparatus 112 is configured to convert a direct current from the first battery 101 into an alternating current for the first external load.

In an embodiment, the alternating current-direct current conversion apparatus 112 is an alternating current-direct current conversion apparatus 112 of a vehicle. The alternating current-direct current conversion apparatus 112 of the vehicle includes a high-voltage DC/low-voltage DC converter 113, a high-voltage DC/DC converter 114, a high-voltage AC/DC converter 115, and an alternating current output assembly 116 that are sequentially connected.

In the on-board power supply 100, a first end of the high-voltage DC/low-voltage DC converter 113 is connected to the non-power battery, a second end of the high-voltage DC/low-voltage DC converter 113 is connected to a first end of the high-voltage DC/DC converter 114, a second end of the high-voltage DC/DC converter 114 is connected to a first end of the high-voltage AC/DC converter 115, a second end of the high-voltage AC/DC converter 115 is connected to a first end of the alternating current output assembly 116, and a second end of the alternating current output assembly 116 is connected to the first external load.

The high-voltage DC/low-voltage DC converter 113 includes: a first primary conversion circuit 119, a first isolation conversion circuit 118, and a first secondary conversion circuit 117.

The high-voltage DC/DC converter 114 includes a second primary conversion circuit 122, a second isolation conversion circuit 121, and a second secondary conversion circuit 120. The high-voltage AC/DC converter 115 includes a power factor correction circuit 123. The alternating current output assembly 116 includes a switch control circuit 106.

A first end of the first secondary conversion circuit 117 is connected to the non-power battery, a second end of the first secondary conversion circuit 117 is connected to a first end of the first isolation conversion circuit 118, a second end of the first isolation conversion circuit 118 is connected to a first end of the first primary conversion circuit 119, and a second end of the first primary conversion circuit 119 is connected to a first end of the second secondary conversion circuit 120.

A second end of the second secondary conversion circuit 120 is connected to a first end of the second isolation conversion circuit 121, a second end of the second isolation conversion circuit 121 is connected to a first end of the second primary conversion circuit 122, a second end of the second primary conversion circuit 122 is connected to a first end of the power factor correction circuit 123, a second end of the power factor correction circuit 123 is connected to a first end of the switch control circuit 106, and the switch control circuit 106 is connected to the first external load.

The first secondary conversion circuit 117 is configured to: receive a direct current from the non-power battery, convert the direct current into an alternating current, and transmit the alternating current to a secondary winding of the first isolation conversion circuit 118. The first isolation conversion circuit 118 is configured to: receive the alternating current whose voltage value is a first voltage from the first secondary conversion circuit 117 through the secondary winding, generate an alternating current whose voltage value is a second voltage on a primary winding, and transmit the generated alternating current to the first primary conversion circuit 119. The first primary conversion circuit 119 is configured to: receive alternating current from the primary winding, convert the alternating current into direct current, and transmit the direct current to the second secondary conversion circuit 120 of the high-voltage DC/DC converter 114.

The second secondary conversion circuit 120 is configured to: receive a direct current from the first primary conversion circuit 119, convert the direct current into an alternating current, and transmit the alternating current to a secondary winding of the second isolation conversion circuit 121. The second isolation conversion circuit 121 is configured to: receive the alternating current whose voltage value is a third voltage from the second secondary conversion circuit 120 through the secondary winding, generate an alternating current whose voltage value is a fourth voltage on a primary winding, and transmit the generated alternating current to the second primary conversion circuit 122. The second primary conversion circuit 122 is configured to: receive the alternating current from the primary winding, convert the alternating current into a direct current, and transmit the direct current to the power factor correction circuit 123. The power factor correction circuit 123 is configured to convert the received direct current from the second primary conversion circuit 122 into an alternating current. The alternating current from the power factor correction circuit 123 is transmitted to the first external load through the switch control circuit 106 of the alternating current output assembly 116.

In the on-board power supply 100 provided in this embodiment, the non-power battery in a battery system 200 of the vehicle may be detached from the vehicle, and forms a portable power supply with the voltage conversion apparatus and the alternating current conversion apparatus. The voltage conversion apparatus may convert a voltage of the first battery 101 and output a direct current to the first external load and convert a direct current from the power battery into an alternating current for the first external load. In this way, the battery system 200 of the vehicle is fully utilized when in an idle state, and external direct and alternating current power requirements of a vehicle owner are met, thereby improving vehicle use experience of the vehicle owner.

### Embodiment 6

In an embodiment, an on-board power supply 100 includes a first battery 101, a first voltage conversion apparatus 103, and an alternating current-direct current conversion apparatus 112. For the first battery 101 and the first voltage conversion apparatus 103, refer to any one of the foregoing embodiments. Details are not described herein again.

The alternating current-direct current conversion apparatus 112 includes a high-voltage DC/low-voltage DC converter 113, a high-voltage DC/DC converter 114, a high-voltage AC/DC converter 115, and an alternating current output assembly 116 that are sequentially connected. The high-voltage DC/low-voltage DC converter 113, the high-voltage DC/DC converter 114, and the high-voltage AC/DC converter 115 are all vehicle apparatuses removable from a vehicle; and the alternating current output assembly 116 is an external apparatus.

Specific structures and connection relationships of the high-voltage DC/low-voltage DC converter 113, the high-voltage DC/DC converter 114, the high-voltage AC/DC converter 115, and the alternating current output assembly 116 are the same as those in the foregoing embodiment. Details are not described herein again.

### Embodiment 7

In an embodiment, an on-board power supply 100 includes a first battery 101, a first voltage conversion apparatus 103, and an alternating current-direct current conversion apparatus 112. For the first battery 101 and the first voltage conversion apparatus 103, refer to any one of the foregoing embodiments. Details are not described herein again.

The alternating current-direct current conversion apparatus 112 includes a high-voltage DC/low-voltage DC converter 113, a high-voltage AC/DC converter 115, and an alternating current output assembly 116 that are sequentially connected. The high-voltage DC/low-voltage DC converter 113, the high-voltage AC/DC converter 115, and the alternating current output assembly 116 are all vehicle apparatuses removable from a vehicle.

In the on-board power supply 100, a first end of the high-voltage DC/low-voltage DC converter 113 is connected to the non-power battery, a second end of the high-voltage DC/low-voltage DC converter 113 is connected to a first end of the high-voltage AC/DC converter 115, a second end of the high-voltage AC/DC converter 115 is connected to a first end of the alternating current output assembly 116, and a second end of the alternating current output assembly 116 is connected to a first external load.

The high-voltage DC/low-voltage DC converter 113 includes: a first primary conversion circuit 119, a first isolation conversion circuit 118, and a first secondary conversion circuit 117.

The high-voltage AC/DC converter 115 includes a power factor correction circuit 123. The alternating current output assembly 116 includes a switch control circuit 106.

A first end of the first secondary conversion circuit 117 is connected to the non-power battery, a second end of the first secondary conversion circuit 117 is connected to a first end of the first isolation conversion circuit 118, and a second end of the first isolation conversion circuit 118 is connected to a first end of the first primary conversion circuit 119. A second end of the first primary conversion circuit 119 is connected to a first end of the power factor correction circuit 123, a second end of the power factor correction circuit 123 is connected to a first end of the switch control circuit 106, and the switch control circuit 106 is connected to the first external load.

The first secondary conversion circuit 117 is configured to: receive a direct current from the non-power battery, convert the direct current into an alternating current, and transmit the alternating current to a secondary winding of the first isolation conversion circuit 118. The first isolation conversion circuit 118 is configured to: receive the alternating current whose voltage value is a first voltage from the first secondary conversion circuit 117 through the secondary winding, generate an alternating current whose voltage value is a second voltage on a primary winding, and transmit the generated alternating current to the first primary conversion circuit 119. The first primary conversion circuit 119 is configured to: receive the alternating current from the primary winding, convert the alternating current into a direct current, and transmit the direct current to the power factor correction circuit 123. The power factor correction circuit 123 is configured to convert the received direct current from the first primary conversion circuit 119 into an alternating current. The alternating current from the power factor correction circuit 123 is transmitted to the first external load through the switch control circuit 106 of the alternating current output assembly 116.

### Embodiment 8

In an embodiment, an on-board power supply 100 includes a first battery 101, a first voltage conversion apparatus 103, and an alternating current-direct current conversion apparatus 112. For the first battery 101 and the first voltage conversion apparatus 103, refer to any one of the foregoing embodiments. Details are not described herein again.

The alternating current-direct current conversion apparatus 112 includes a high-voltage DC/low-voltage DC converter 113 and a high-voltage DC/AC converter that are connected to each other. The high-voltage DC/low-voltage DC converter 113 is a vehicle apparatus removable from a vehicle, and the high-voltage DC/AC converter is an external apparatus.

In the on-board power supply 100, a first end of the high-voltage DC/low-voltage DC converter 113 is connected to the first battery 101, and a second end of the high-voltage DC/low-voltage DC converter 113 is connected to a first end of the high-voltage DC/AC converter. A second end of the high-voltage DC/AC converter is connected to a first external load.

The high-voltage DC/low-voltage DC converter 113 includes: a first primary conversion circuit 119, a first isolation conversion circuit 118, and a first secondary conversion circuit 117.

The high-voltage DC/AC converter includes a power factor correction circuit 123.

A first end of the first secondary conversion circuit 117 is connected to the non-power battery, a second end of the first secondary conversion circuit 117 is connected to a first end of the first isolation conversion circuit 118, and a second end of the first isolation conversion circuit 118 is connected to a first end of the first primary conversion circuit 119. A second end of the first primary conversion circuit 119 is connected to a first end of the power factor correction circuit 123, a second end of the power factor correction circuit 123 is connected to a first end of the switch control circuit 106, and the switch control circuit 106 is connected to the first external load.

The first secondary conversion circuit 117 is configured to: receive a direct current from the non-power battery, convert the direct current into an alternating current, and transmit the alternating current to a secondary winding of the first isolation conversion circuit 118. The first isolation conversion circuit 118 is configured to: receive the alternating current whose voltage value is a first voltage from the first secondary conversion circuit 117 through the secondary winding, generate an alternating current whose voltage value is a second voltage on a primary winding, and transmit the generated alternating current to the first primary conversion circuit 119. The first primary conversion circuit 119 is configured to: receive the alternating current from the primary winding, convert the alternating current into a direct current, and transmit the direct current to the power factor correction circuit 123. The power factor correction circuit 123 is configured to convert the received direct current from the first primary conversion circuit 119 into an alternating current. The alternating current from the power factor correction circuit 123 is transmitted to the first external load through the switch control circuit 106 of the alternating current output assembly 116.

### Embodiment 9

In an embodiment, an on-board power supply 100 includes a first battery 101, a first voltage conversion apparatus 103, and an alternating current-direct current conversion apparatus 112. For the first battery 101 and the first voltage conversion apparatus 103, refer to any one of the foregoing embodiments. Details are not described herein again.

The alternating current-direct current conversion apparatus 112 is an external alternating current-direct current conversion apparatus 112. The external alternating current-direct current conversion apparatus 112 includes a high-voltage DC/AC converter. A first end of the high-voltage DC/AC converter is connected to the first battery 101, and a second end of the high-voltage DC/AC converter is connected to a first external load.

### Embodiment 10

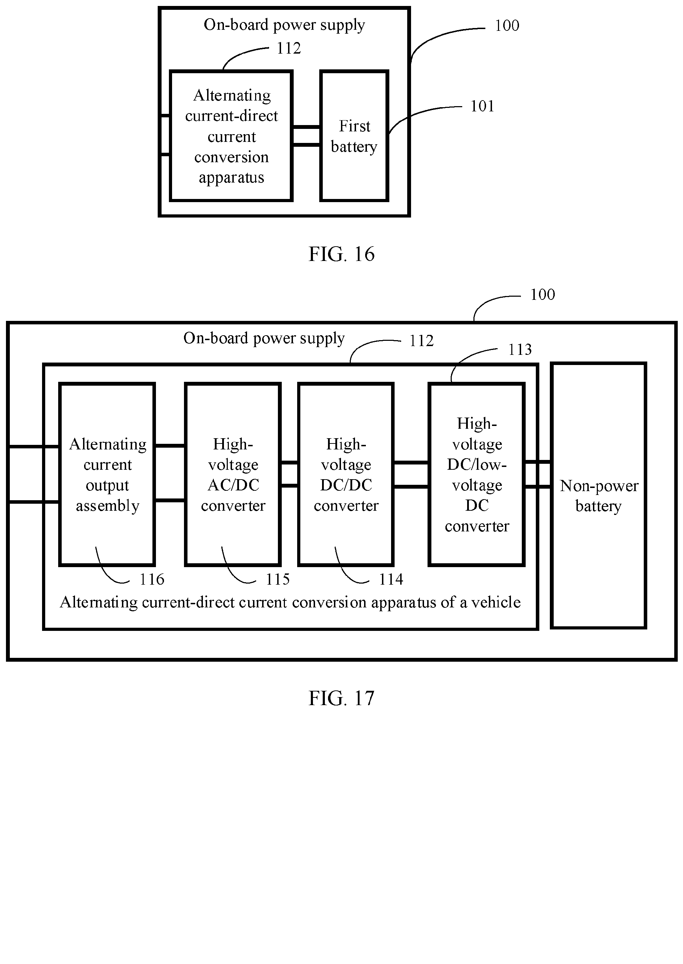

Refer to FIG. 16. An external load includes a second external load, and an electrical energy conversion apparatus 102 includes an alternating current-direct current conversion apparatus 112. An embodiment of the present disclosure provides an on-board power supply 100. At least a part of apparatuses of the on-board power supply 100 are detachably connected to a vehicle. As shown in FIG. 16, the on-board power supply 100 in this embodiment includes a first battery 101 and the alternating current-direct current conversion apparatus 112.

The first battery 101 is a non-power battery of the vehicle. The first battery 101 is configured to supply power to a second external load when in a detached state.

A first end of the alternating current-direct current conversion apparatus 112 is connected to the first battery 101, and a second end of the alternating current-direct current conversion apparatus 112 is adapted to be connected to the second external load. In the on-board power supply 100, the alternating current-direct current conversion apparatus 112 is configured to convert a direct current from the first battery 101 into an alternating current for the second external load.

In the on-board power supply 100 provided in this embodiment, the non-power battery in a battery system 200 of the vehicle may be detached from the vehicle, and forms a portable power supply with the alternating current conversion apparatus. The alternating current-direct current conversion apparatus 112 may convert a direct current from the non-power battery into the alternating current for the second external load. In this way, the battery system 200 of the vehicle is fully utilized when in an idle state, and an external alternating current power requirement of a vehicle owner is met, thereby improving vehicle use experience of the vehicle owner.

In an embodiment, the first battery 101 is at least one of a storage battery, an iron battery, and a supercapacitor.

In an embodiment, the on-board power supply 100 further includes a storage compartment 108. The first battery 101 and the alternating current-direct current conversion apparatus 112 are accommodated in the storage compartment 108.

The storage compartment 108 is provided with a locking mechanism 109. The locking mechanism 109 is configured to open when an electrical connection between the on-board power supply 100 and the vehicle is disconnected, to allow detachment of the on-board power supply 100.

The storage compartment 108 is provided with an alternating current output interface, and the second end of the alternating current-direct current conversion apparatus 112 is connected to the alternating current output interface to output an alternating current. The storage compartment 108 is further provided with an electrical connection interface 111, the first battery 101 is connected to the electrical connection interface 111, and the first battery 101 is adapted to be electrically connected to the vehicle through the electrical connection interface 111.

### Embodiment 11

In an embodiment, an on-board power supply 100 includes a first battery 101 and an alternating current-direct current conversion apparatus 112. The first battery 101 is a non-power battery of a vehicle. The alternating current-direct current conversion apparatus 112 is an alternating current-direct current conversion apparatus 112 of the vehicle. The alternating current-direct current conversion apparatus 112 of the vehicle includes a high-voltage DC/low-voltage DC converter 113, a high-voltage DC/DC converter 114, a high-voltage AC/DC converter 115, and an alternating current output assembly 116 that are sequentially connected. For a block diagram of a structure of the on-board power supply 100 in this embodiment, refer to FIG. 17.

In the on-board power supply 100, a first end of the alternating current-direct current conversion apparatus 112 of the vehicle is connected to the non-power battery of the vehicle, and a second end of the alternating current-direct current conversion apparatus 112 of the vehicle is adapted to be connected to a second external load.

In the vehicle, the first end of the alternating current-direct current conversion apparatus 112 of the vehicle is connected to the non-power battery, and the second end of the alternating current-direct current conversion apparatus 112 of the vehicle is adapted to be detachably connected to an alternating current electrical load of the vehicle.

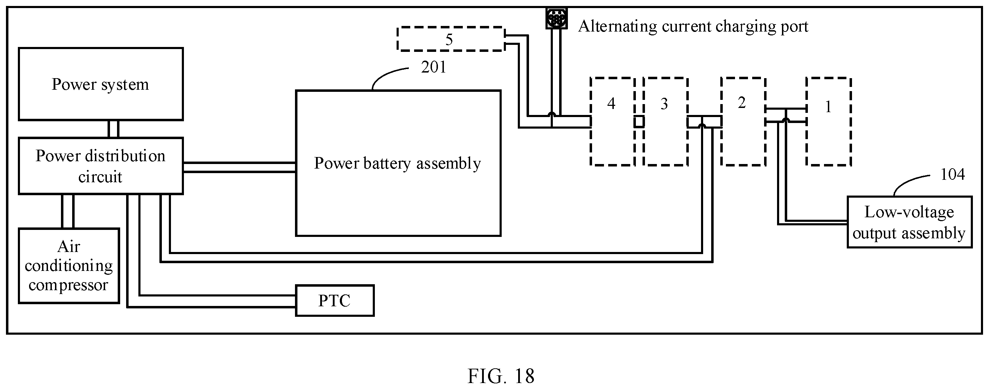

FIG. 18 is a diagram of a battery system 200 of a vehicle with a non-power battery and an alternating current-direct current conversion apparatus 112 detached from the battery system 200. A location of a dashed box 1 is a position of the non-power battery in the battery system 200 of the vehicle. A location of a dashed box 2 is a position of the high-voltage DC/low-voltage DC converter 113 in the battery system 200 of the vehicle. A location of a dashed box 3 is a position of the high-voltage DC/DC converter 114 in the battery system 200 of the vehicle. A location of a dashed box 4 is a position of the high-voltage AC/DC converter 115 in the battery system 200 of the vehicle. A location of a dashed box 5 is a position of the alternating current output assembly 116 in the battery system 200 of the vehicle.

Refer to FIG. 17. In the on-board power supply 100, a first end of the high-voltage DC/low-voltage DC converter 113 is connected to the non-power battery, a second end of the high-voltage DC/low-voltage DC converter 113 is connected to a first end of the high-voltage DC/DC converter 114, a second end of the high-voltage DC/DC converter 114 is connected to a first end of the high-voltage AC/DC converter 115, a second end of the high-voltage AC/DC converter 115 is connected to a first end of the alternating current output assembly 116, and a second end of the alternating current output assembly 116 is connected to the second external load.

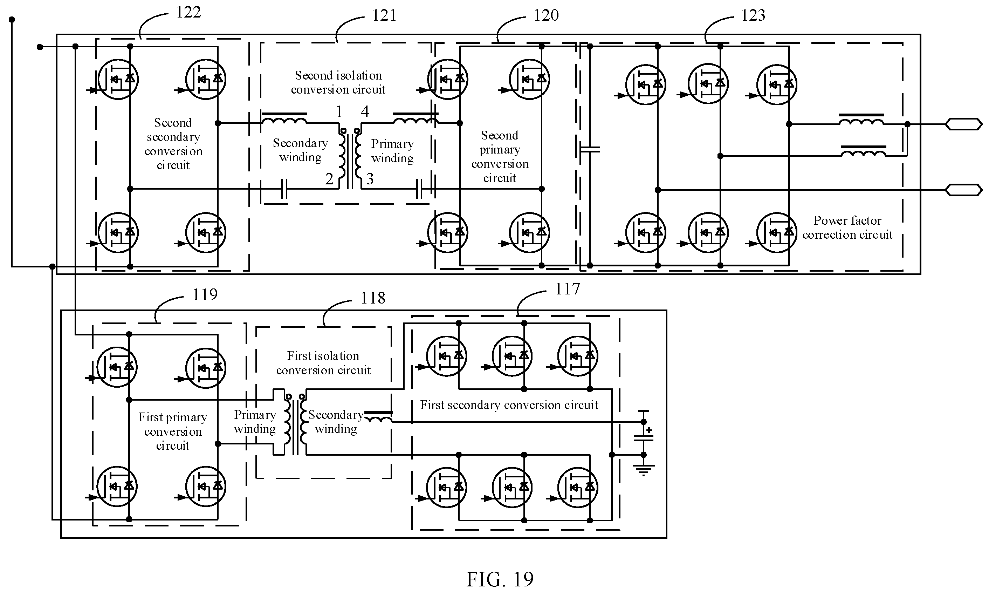

Refer to FIG. 19. The high-voltage DC/low-voltage DC converter 113 includes: a first primary conversion circuit 119, a first isolation conversion circuit 118, and a first secondary conversion circuit 117.

The high-voltage DC/DC converter 114 includes a second primary conversion circuit 122, a second isolation conversion circuit 121, and a second secondary conversion circuit 120. The high-voltage AC/DC converter 115 includes a power factor correction circuit 123. The alternating current output assembly 116 includes a switch control circuit 106.

A first end of the first secondary conversion circuit 117 is connected to the non-power battery, a second end of the first secondary conversion circuit 117 is connected to a first end of the first isolation conversion circuit 118, a second end of the first isolation conversion circuit 118 is connected to a first end of the first primary conversion circuit 119, and a second end of the first primary conversion circuit 119 is connected to a first end of the second secondary conversion circuit 120.

A second end of the second secondary conversion circuit 120 is connected to a first end of the second isolation conversion circuit 121, a second end of the second isolation conversion circuit 121 is connected to a first end of the second primary conversion circuit 122, a second end of the second primary conversion circuit 122 is connected to a first end of the power factor correction circuit 123, a second end of the power factor correction circuit 123 is connected to a first end of the switch control circuit 106, and the switch control circuit 106 is connected to the second external load.

The first secondary conversion circuit 117 is configured to: receive a direct current from the non-power battery, convert the direct current into an alternating current, and transmit the alternating current to a secondary winding of the first isolation conversion circuit 118. The first isolation conversion circuit 118 is configured to: receive the alternating current whose voltage value is a first voltage from the first secondary conversion circuit 117 through the secondary winding, generate an alternating current whose voltage value is a second voltage on a primary winding, and transmit the generated alternating current to the first primary conversion circuit 119. The first primary conversion circuit 119 is configured to: receive alternating current from the primary winding, convert the alternating current into direct current, and transmit the direct current to the second secondary conversion circuit 120 of the high-voltage DC/DC converter 114.

The second secondary conversion circuit 120 is configured to: receive a direct current from the first primary conversion circuit 119, convert the direct current into an alternating current, and transmit the alternating current to a secondary winding of the second isolation conversion circuit 121. The second isolation conversion circuit 121 is configured to: receive the alternating current whose voltage value is a third voltage from the second secondary conversion circuit 120 through the secondary winding, generate an alternating current whose voltage value is a fourth voltage on a primary winding, and transmit the generated alternating current to the second primary conversion circuit 122. The second primary conversion circuit 122 is configured to: receive the alternating current from the primary winding, convert the alternating current into a direct current, and transmit the direct current to the power factor correction circuit 123. The power factor correction circuit 123 is configured to convert the received direct current from the second primary conversion circuit 122 into an alternating current. The alternating current from the power factor correction circuit 123 is transmitted to the second external load through the switch control circuit 106 of the alternating current output assembly 116.

The on-board power supply 100 further includes a storage compartment 108. The non-power battery of the vehicle and the alternating current-direct current conversion apparatus 112 of the vehicle are accommodated in the storage compartment 108.

The storage compartment 108 is provided with a locking mechanism 109. The locking mechanism 109 is configured to open when an electrical connection between the on-board power supply 100 and the vehicle is disconnected, to allow detachment of the on-board power supply 100.

The storage compartment 108 is provided with an alternating current output interface, and the second end of the alternating current-direct current conversion apparatus 112 is connected to the alternating current output interface to output an alternating current. The storage compartment 108 is further provided with an electrical connection interface 111, the first battery 101 is connected to the electrical connection interface 111, and the first battery 101 is adapted to be electrically connected to the vehicle through the electrical connection interface 111.

In the on-board power supply 100 provided in this embodiment, both the non-power battery and the alternating current conversion apparatus in the battery system 200 may be detached from the vehicle, and form a portable power supply. The alternating current-direct current conversion apparatus 112 may convert a direct current from the non-power battery into the alternating current for the second external load. In this way, the battery system 200 of the vehicle is fully utilized when in an idle state, and an external alternating current power requirement of a vehicle owner is met, thereby improving vehicle use experience of the vehicle owner.

### Embodiment 12

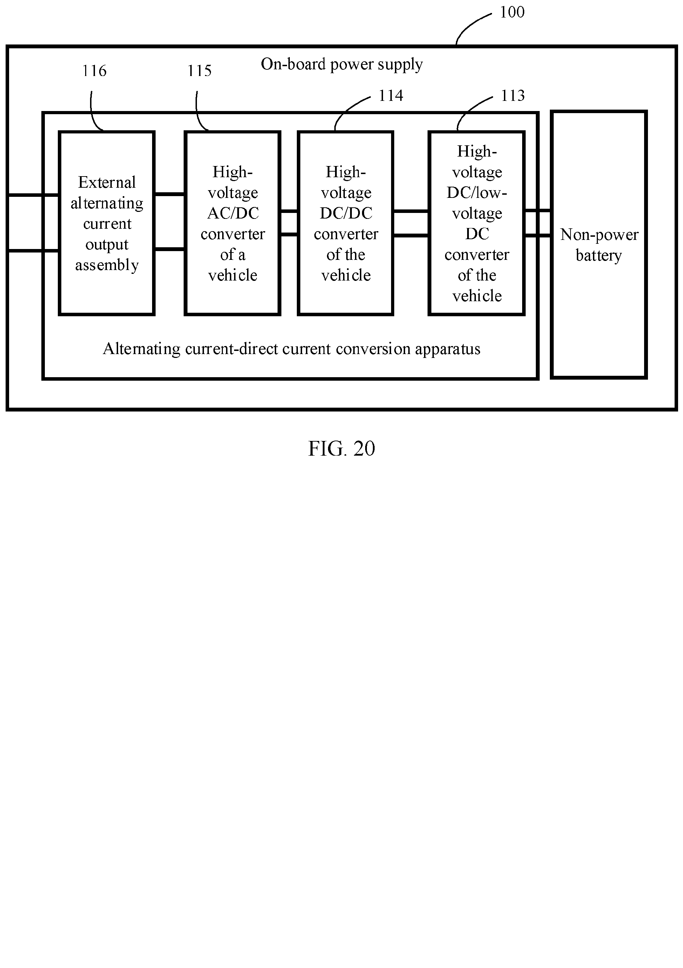

In an embodiment, an on-board power supply 100 includes a first battery 101 and an alternating current-direct current conversion apparatus 112. The first battery 101 is a non-power battery of a vehicle. The alternating current-direct current conversion apparatus 112 includes a high-voltage DC/low-voltage DC converter 113, a high-voltage DC/DC converter 114, a high-voltage AC/DC converter 115, and an alternating current output assembly 116 that are sequentially connected. The high-voltage DC/low-voltage DC converter 113, the high-voltage DC/DC converter 114, and the high-voltage AC/DC converter 115 are all vehicle apparatuses removable from the vehicle; and the alternating current output assembly 116 is an external apparatus. For a block diagram of a structure of the on-board power supply 100 in this embodiment, refer to FIG. 20.

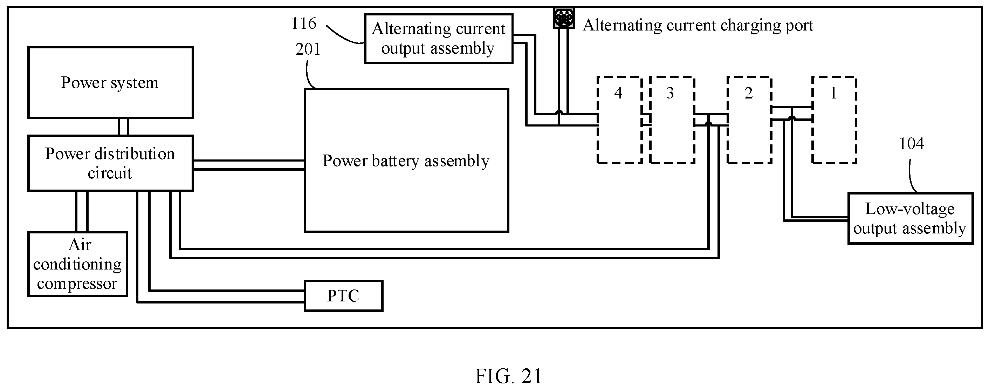

FIG. 21 is a diagram of a battery system 200 of a vehicle with a part of structures of both a non-power battery and an alternating current-direct current conversion apparatus 112 detached from the battery system 200. A location of a dashed box 1 is a position of the non-power battery in the battery system 200 of the vehicle. A location of a dashed box 2 is a position of the high-voltage DC/low-voltage DC converter 113 in the battery system 200 of the vehicle. A location of a dashed box 3 is a position of the high-voltage DC/DC converter 114 in the battery system 200 of the vehicle. A location of a dashed box 4 is a position of the high-voltage AC/DC converter 115 in the battery system 200 of the vehicle.

Refer to FIG. 20. In the on-board power supply 100, a first end of the high-voltage DC/low-voltage DC converter 113 is connected to the non-power battery, a second end of the high-voltage DC/low-voltage DC converter 113 is connected to a first end of the high-voltage DC/DC converter 114, a second end of the high-voltage DC/DC converter 114 is connected to a first end of the high-voltage AC/DC converter 115, a second end of the high-voltage AC/DC converter 115 is connected to a first end of the alternating current output assembly 116, and a second end of the alternating current output assembly 116 is connected to the second external load.

Refer to FIG. 19. The high-voltage DC/low-voltage DC converter 113 includes: a first primary conversion circuit 119, a first isolation conversion circuit 118, and a first secondary conversion circuit 117.

The high-voltage DC/DC converter 114 includes a second primary conversion circuit 122, a second isolation conversion circuit 121, and a second secondary conversion circuit 120. The high-voltage AC/DC converter 115 includes a power factor correction circuit 123. The alternating current output assembly 116 includes a switch control circuit 106.

A first end of the first secondary conversion circuit 117 is connected to the non-power battery, a second end of the first secondary conversion circuit 117 is connected to a first end of the first isolation conversion circuit 118, a second end of the first isolation conversion circuit 118 is connected to a first end of the first primary conversion circuit 119, and a second end of the first primary conversion circuit 119 is connected to a first end of the second secondary conversion circuit 120.

A second end of the second secondary conversion circuit 120 is connected to a first end of the second isolation conversion circuit 121, a second end of the second isolation conversion circuit 121 is connected to a first end of the second primary conversion circuit 122, a second end of the second primary conversion circuit 122 is connected to a first end of the power factor correction circuit 123, a second end of the power factor correction circuit 123 is connected to a first end of the switch control circuit 106, and the switch control circuit 106 is connected to the second external load.

The first secondary conversion circuit 117 is configured to: receive a direct current from the non-power battery, convert the direct current into an alternating current, and transmit the alternating current to a secondary winding of the first isolation conversion circuit 118. The first isolation conversion circuit 118 is configured to: receive the alternating current whose voltage value is a first voltage from the first secondary conversion circuit 117 through the secondary winding, generate an alternating current whose voltage value is a second voltage on a primary winding, and transmit the generated alternating current to the first primary conversion circuit 119. The first primary conversion circuit 119 is configured to: receive alternating current from the primary winding, convert the alternating current into direct current, and transmit the direct current to the second secondary conversion circuit 120 of the high-voltage DC/DC converter 114.

The second secondary conversion circuit 120 is configured to: receive a direct current from the first primary conversion circuit 119, convert the direct current into an alternating current, and transmit the alternating current to a secondary winding of the second isolation conversion circuit 121. The second isolation conversion circuit 121 is configured to: receive the alternating current whose voltage value is a third voltage from the second secondary conversion circuit 120 through the secondary winding, generate an alternating current whose voltage value is a fourth voltage on a primary winding, and transmit the generated alternating current to the second primary conversion circuit 122. The second primary conversion circuit 122 is configured to: receive the alternating current from the primary winding, convert the alternating current into a direct current, and transmit the direct current to the power factor correction circuit 123. The power factor correction circuit 123 is configured to convert the received direct current from the second primary conversion circuit 122 into an alternating current. The alternating current from the power factor correction circuit 123 is transmitted to the second external load through the switch control circuit 106 of the alternating current output assembly 116.

The on-board power supply 100 further includes a storage compartment 108. The non-power battery of the vehicle, the high-voltage DC/low-voltage DC converter 113, the high-voltage DC/DC converter 114, and the high-voltage AC/DC converter 115 are accommodated in the storage compartment 108.

The storage compartment 108 is provided with a locking mechanism 109. The locking mechanism 109 is configured to open when an electrical connection between the non-power battery and the vehicle is disconnected, to allow detachment of the on-board power supply 100.

The storage compartment 108 is provided with an alternating current output interface, and the second end of the high-voltage AC/DC converter 115 is connected to the alternating current output interface to output an alternating current to an external alternating current output assembly 116. The storage compartment 108 is further provided with an electrical connection interface 111, the first battery 101 is connected to the electrical connection interface 111, and the first battery 101 is adapted to be electrically connected to the vehicle through the electrical connection interface 111.

In the on-board power supply 100 provided in this embodiment, the part of structures of both the power battery and the alternating current conversion apparatus in the battery system 200 may be detached from the vehicle, and form a portable power supply with an external apparatus. The alternating current-direct current conversion apparatus 112 may convert the direct current from the power battery into the alternating current for the second external load. In this way, the battery system 200 of the vehicle is fully utilized when in an idle state, and an external alternating current power requirement of a vehicle owner is met, thereby improving vehicle use experience of the vehicle owner.

### Embodiment 13

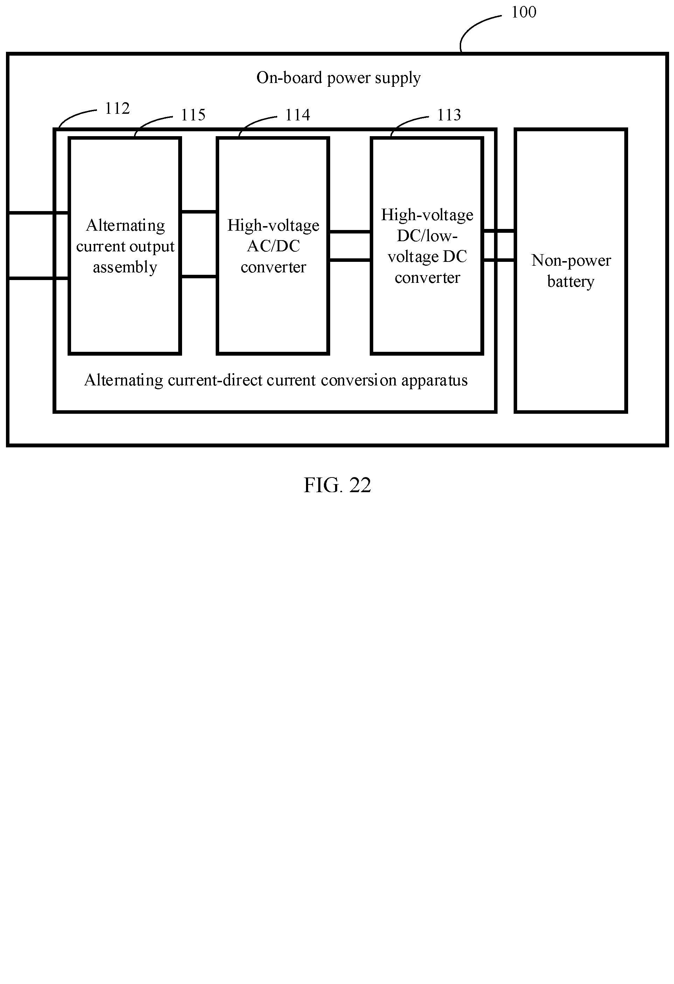

In an embodiment, an on-board power supply 100 includes a first battery 101 and an alternating current-direct current conversion apparatus 112. The first battery 101 is a non-power battery of a vehicle. The alternating current-direct current conversion apparatus 112 includes a high-voltage DC/low-voltage DC converter 113, a high-voltage AC/DC converter 115, and an alternating current output assembly 116 that are sequentially connected. The high-voltage DC/low-voltage DC converter 113, the high-voltage AC/DC converter 115, and the alternating current output assembly 116 are all vehicle apparatuses removable from the vehicle. For a block diagram of a structure of the on-board power supply 100 in this embodiment, refer to FIG. 22.

In the on-board power supply 100, a first end of the alternating current-direct current conversion apparatus 112 of the vehicle is connected to the non-power battery of the vehicle, and a second end of the alternating current-direct current conversion apparatus 112 is adapted to be connected to a second external load.

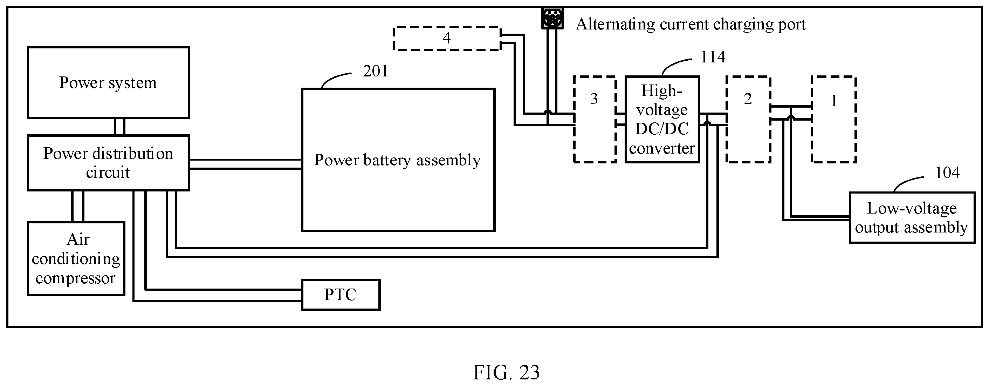

FIG. 23 is a diagram of a battery system 200 of a vehicle with a part of structures of both a non-power battery and an alternating current-direct current conversion apparatus 112 detached from the battery system. 200. A location of a dashed box 1 is a position of the non-power battery in the battery system 200 of the vehicle. A location of a dashed box 2 is a position of the high-voltage DC/low-voltage DC converter 113 in the battery system 200 of the vehicle. A location of a dashed box 3 is a position of the high-voltage AC/DC converter 115 in the battery system 200 of the vehicle. A location of a dashed box 4 is a position of the alternating current output assembly 116 in the battery system 200 of the vehicle.

Refer to FIG. 22. In the on-board power supply 100, a first end of the high-voltage DC/low-voltage DC converter 113 is connected to the non-power battery, a second end of the high-voltage DC/low-voltage DC converter 113 is connected to a first end of the high-voltage AC/DC converter 115, a second end of the high-voltage AC/DC converter 115 is connected to a first end of the alternating current output assembly 116, and a second end of the alternating current output assembly 116 is connected to the second external load.

The high-voltage DC/low-voltage DC converter 113 includes: a first primary conversion circuit 119, a first isolation conversion circuit 118, and a first secondary conversion circuit 117. For a schematic of a circuit of the high-voltage DC/low-voltage DC converter 113, refer to the high-voltage DC/low-voltage DC converter 113 shown in FIG. 19.

The high-voltage AC/DC converter 115 includes a power factor correction circuit 123. The alternating current output assembly 116 includes a switch control circuit 106. For a schematic of a circuit of the high-voltage AC/DC converter 115, refer to the high-voltage AC/DC converter 115 shown in FIG. 19.

A first end of the first secondary conversion circuit 117 is connected to the non-power battery, a second end of the first secondary conversion circuit 117 is connected to a first end of the first isolation conversion circuit 118, and a second end of the first isolation conversion circuit 118 is connected to a first end of the first primary conversion circuit 119. A second end of the first primary conversion circuit 119 is connected to a first end of the power factor correction circuit 123, a second end of the power factor correction circuit 123 is connected to a first end of the switch control circuit 106, and the switch control circuit 106 is connected to the second external load.

The first secondary conversion circuit 117 is configured to: receive a direct current from the non-power battery, convert the direct current into an alternating current, and transmit the alternating current to a secondary winding of the first isolation conversion circuit 118. The first isolation conversion circuit 118 is configured to: receive the alternating current whose voltage value is a first voltage from the first secondary conversion circuit 117 through the secondary winding, generate an alternating current whose voltage value is a second voltage on a primary winding, and transmit the generated alternating current to the first primary conversion circuit 119. The first primary conversion circuit 119 is configured to: receive the alternating current from the primary winding, convert the alternating current into a direct current, and transmit the direct current to the power factor correction circuit 123. The power factor correction circuit 123 is configured to convert the received direct current from the first primary conversion circuit 119 into an alternating current. The alternating current from the power factor correction circuit 123 is transmitted to the second external load through the switch control circuit 106 of the alternating current output assembly 116.

The on-board power supply 100 further includes a storage compartment 108. The non-power battery of the vehicle is accommodated in the storage compartment 108.

The storage compartment 108 is provided with a locking mechanism 109. The locking mechanism 109 is configured to open when an electrical connection between the non-power battery and the vehicle is disconnected, to allow detachment of the on-board power supply 100.

The storage compartment 108 is provided with a first electrical connection interface 111 and a second electrical connection interface 111. The non-power battery of the vehicle is connected to the vehicle through the first electrical connection interface 111. The power battery of the vehicle is connected to the high-voltage DC/low-voltage DC converter 113 through the second electrical connection interface 111.

In the on-board power supply 100 provided in this embodiment, both the non-power battery and the alternating current conversion apparatus in the battery system 200 may be detached from the vehicle, and form a portable power supply. The alternating current-direct current conversion apparatus 112 may convert a direct current from the non-power battery into the alternating current for the second external load. In this way, the battery system 200 of the vehicle is fully utilized when in an idle state, and an external alternating current power requirement of a vehicle owner is met, thereby improving vehicle use experience of the vehicle owner.

### Embodiment 14

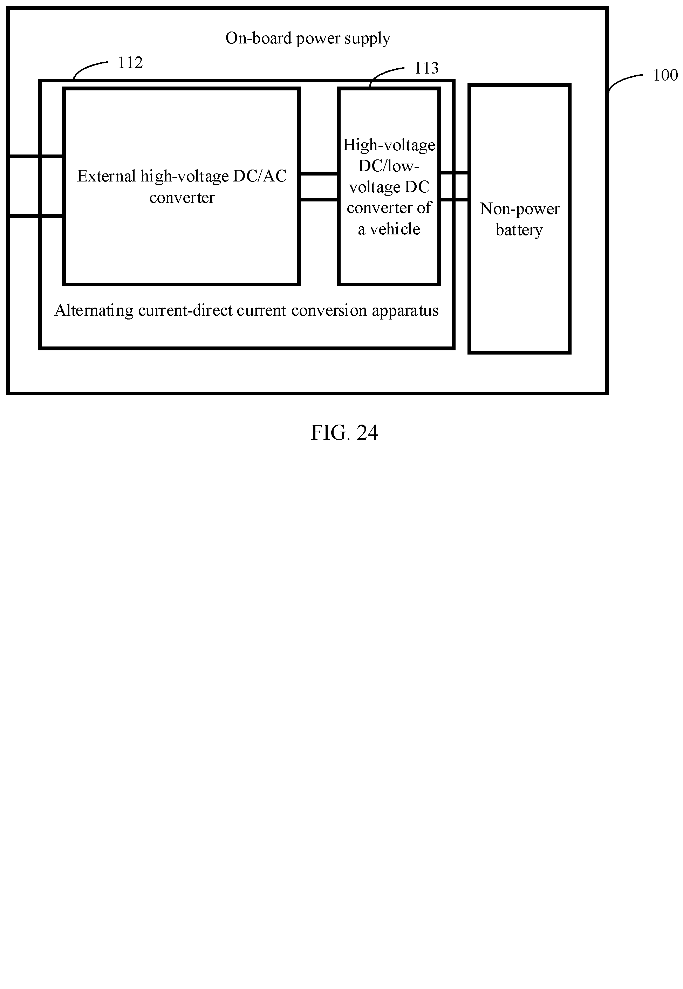

In an embodiment, an on-board power supply 100 includes a first battery 101 and an alternating current-direct current conversion apparatus 112. The first battery 101 is a non-power battery of a vehicle. The alternating current-direct current conversion apparatus 112 includes a high-voltage DC/low-voltage DC converter 113, and a high-voltage DC/AC converter that are connected to each other. The high-voltage DC/low-voltage DC converter 113 is a vehicle apparatus removable from the vehicle, and the high-voltage DC/AC converter is an external apparatus. A first end of the high-voltage DC/low-voltage DC converter 113 is connected to the first battery 101, and a second end of the high-voltage DC/low-voltage DC converter 113 is connected to a first end of the high-voltage DC/AC converter. A second end of the high-voltage DC/AC converter is connected to a second external load. For a block diagram of a structure of the on-board power supply 100 in this embodiment, refer to FIG. 24.

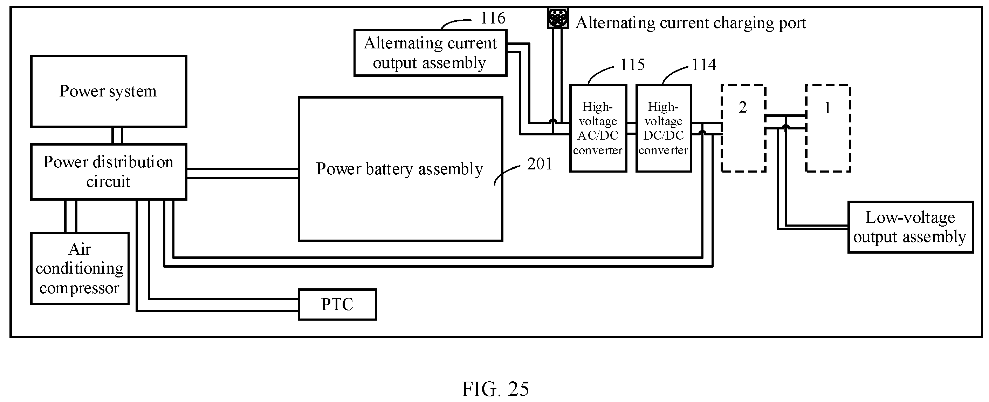

FIG. 25 is a diagram of a battery system 200 of a vehicle with a non-power battery and a high-voltage DC/low-voltage DC converter 113 detached from the battery system 200. A location of a dashed box 1 is a position of the non-power battery in the battery system 200 of the vehicle. A location of a dashed box 2 is a position of the high-voltage DC/low-voltage DC converter 113 in the battery system 200 of the vehicle.

In the on-board power supply 100, the high-voltage DC/low-voltage DC converter 113 includes: a first primary conversion circuit 119, a first isolation conversion circuit 118, and a first secondary conversion circuit 117. For a schematic of a circuit of the high-voltage DC/low-voltage DC converter 113, refer to the high-voltage DC/low-voltage DC converter 113 shown in FIG. 19.

The high-voltage DC/AC converter includes a power factor correction circuit 123. For a schematic of a circuit of the high-voltage DC/AC converter, refer to the high-voltage AC/DC converter 115 shown in FIG. 19.

A first end of the first secondary conversion circuit 117 is connected to the non-power battery, a second end of the first secondary conversion circuit 117 is connected to a first end of the first isolation conversion circuit 118, and a second end of the first isolation conversion circuit 118 is connected to a first end of the first primary conversion circuit 119. A second end of the first primary conversion circuit 119 is connected to a first end of the power factor correction circuit 123, a second end of the power factor correction circuit 123 is connected to a first end of the switch control circuit 106, and the switch control circuit 106 is connected to the second external load.

The first secondary conversion circuit 117 is configured to: receive a direct current from the non-power battery, convert the direct current into an alternating current, and transmit the alternating current to a secondary winding of the first isolation conversion circuit 118. The first isolation conversion circuit 118 is configured to: receive the alternating current whose voltage value is a first voltage from the first secondary conversion circuit 117 through the secondary winding, generate an alternating current whose voltage value is a second voltage on a primary winding, and transmit the generated alternating current to the first primary conversion circuit 119. The first primary conversion circuit 119 is configured to: receive the alternating current from the primary winding, convert the alternating current into a direct current, and transmit the direct current to the power factor correction circuit 123. The power factor correction circuit 123 is configured to convert the received direct current from the first primary conversion circuit 119 into an alternating current. The alternating current from the power factor correction circuit 123 is transmitted to the second external load through the switch control circuit 106 of the alternating current output assembly 116.

The on-board power supply 100 further includes a storage compartment 108. The non-power battery of the vehicle is accommodated in the storage compartment 108.

The storage compartment 108 is provided with a locking mechanism 109. The locking mechanism 109 is configured to open when an electrical connection between the non-power battery and the vehicle is disconnected, to allow detachment of the on-board power supply 100.

The storage compartment 108 is provided with a first electrical connection interface 111 and a second electrical connection interface 111. The non-power battery of the vehicle is connected to the vehicle through the first electrical connection interface 111. The power battery of the vehicle is connected to the high-voltage DC/low-voltage DC converter 113 through the second electrical connection interface 111.

In an embodiment, the alternating current-direct current conversion apparatus 112 includes a high-voltage DC/low-voltage DC converter 113, a high-voltage DC/AC converter, and an alternating current output assembly 116 that are connected to each other. The high-voltage DC/low-voltage DC converter 113 is a vehicle apparatus removable from the vehicle, and the high-voltage DC/AC converter and the alternating current output assembly 116 are both external apparatuses.

The first end of the high-voltage DC/low-voltage DC converter 113 is connected to the first battery 101, the second end of the high-voltage DC/low-voltage DC converter 113 is connected to the first end of the high-voltage DC/AC converter, the second end of the high-voltage DC/AC converter is connected to a first end of the alternating current output assembly 116, and a second end of the alternating current output assembly 116 is connected to the second external load.

In the on-board power supply 100 provided in this embodiment, the part of structures of both the power battery and the alternating current conversion apparatus in the battery system 200 may be detached from the vehicle, and form a portable power supply. The alternating current-direct current conversion apparatus 112 may convert the direct current from the power battery into the alternating current for the second external load. In this way, the battery system 200 of the vehicle is fully utilized when in an idle state, and an external alternating current power requirement of a vehicle owner is met, thereby improving vehicle use experience of the vehicle owner.

### Embodiment 15

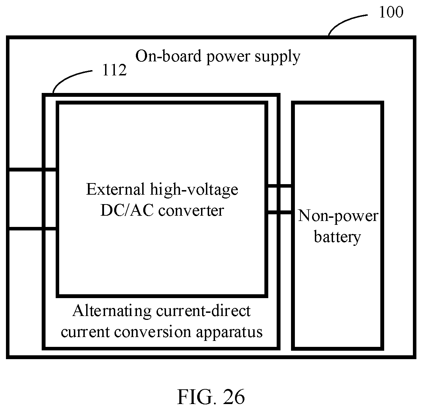

In an embodiment, an on-board power supply 100 includes a first battery 101 and an alternating current-direct current conversion apparatus 112. The first battery 101 is a non-power battery of a vehicle. The alternating current-direct current conversion apparatus 112 is an external alternating current-direct current conversion apparatus 112. The external alternating current-direct current conversion apparatus 112 includes a high-voltage DC/AC converter. A first end of the high-voltage DC/AC converter is connected to the first battery 101, and a second end of the high-voltage DC/AC converter is connected to a second external load. For a block diagram of a structure of the on-board power supply 100 in this embodiment, refer to FIG. 26.

In an embodiment, the external alternating current-direct current conversion apparatus 112 includes a low-voltage DC/AC converter. A first end of the low-voltage DC/AC converter is connected to the first battery 101, and a second end of the low-voltage DC/AC converter is connected to the second external load.

The on-board power supply 100 further includes a storage compartment 108. The non-power battery of the vehicle is accommodated in the storage compartment 108.

The storage compartment 108 is provided with a locking mechanism 109. The locking mechanism 109 is configured to open when an electrical connection between the non-power battery and the vehicle is disconnected, to allow detachment of the on-board power supply 100.

The storage compartment 108 is provided with a first electrical connection interface 111 and a second electrical connection interface 111. The non-power battery of the vehicle is connected to the vehicle through the first electrical connection interface 111. The non-power battery of the vehicle is connected to the high-voltage DC/AC converter through the second electrical connection interface 111.

In the on-board power supply 100 provided in this embodiment, the non-power battery in a battery system 200 of the vehicle may be detached from the vehicle, and forms a portable power supply with the external alternating current-direct current conversion apparatus 112. The alternating current-direct current conversion apparatus 112 may convert a direct current from the non-power battery into the alternating current for the second external load. In this way, the battery system 200 of the vehicle is fully utilized when in an idle state, and an external alternating current power requirement of a vehicle owner is met, thereby improving vehicle use experience of the vehicle owner.

### Embodiment 16

In an embodiment, an on-board power supply 100 includes a first battery 101, an alternating current-direct current conversion apparatus 112, and a voltage conversion apparatus. For the first battery 101 and the alternating current-direct current conversion apparatus 112, refer to any one of the foregoing embodiments.

A first end of the voltage conversion apparatus is connected to the first battery 101, and a second end of the voltage conversion apparatus is adapted to be connected to a second external load. In the on-board power supply 100, the voltage conversion apparatus is configured to convert a voltage of the first battery 101 and output a direct current to the second external load.

In an embodiment, the voltage conversion apparatus includes a low-voltage output assembly 104 of a vehicle.

In an embodiment, a first voltage conversion apparatus 103 includes an external voltage conversion apparatus 105.

The voltage conversion apparatus may buck the voltage of the first battery 101 and output a direct current to the second external load, or may boost the voltage of the first battery 101 and output a direct current to the second external load.

The voltage conversion apparatus includes a switch control circuit 106 and a voltage conversion circuit 107. A first end of the switch control circuit 106 is connected to the first battery 101. A first end of the voltage conversion circuit 107 is connected to a second end of the switch control circuit 106. A second end of the voltage conversion circuit 107 is adapted to be connected to the second external load.

In the on-board power supply 100 provided in this embodiment, the non-power battery in a battery system 200 of the vehicle may be detached from the vehicle, and forms a portable power supply with the voltage conversion apparatus and the alternating current conversion apparatus. The voltage conversion apparatus converts the voltage of the power battery and outputs a direct current to the second external load. The alternating current-direct current conversion apparatus 112 may convert a direct current from the power battery into an alternating current for the second external load. In this way, the battery system 200 of the vehicle is fully utilized when in an idle state, and external direct and alternating current power requirements of a vehicle owner are met, thereby improving vehicle use experience of the vehicle owner.

### <Embodiments of a battery system 200 of a vehicle>

An embodiment of the present disclosure provides a battery system 200 of a vehicle. The battery system 200 of the vehicle in this embodiment includes a power battery assembly 201 and an on-board power supply 100 provided in any one of the foregoing embodiments.

In an embodiment, the battery system 200 further includes a second voltage conversion apparatus 206, where a first end of the second voltage conversion apparatus 206 is connected to the power battery assembly 201. The second voltage conversion apparatus 206 is configured to convert a voltage output by the power battery assembly 201. A second end of the second voltage conversion apparatus 206 is connected to the on-board power supply 100.

In an embodiment, a first battery 101 of the on-board power supply 100 is a non-power battery of the vehicle, and a first voltage conversion apparatus 103 of the on-board power supply 100 includes a low-voltage output assembly 104 of the vehicle. When neither the non-power battery of the vehicle nor the low-voltage output assembly 104 of the vehicle is detached from the vehicle, a first end of the second voltage conversion apparatus 206 is connected to the power battery assembly 201, and a second end of the second voltage conversion apparatus 206 is connected to both the non-power battery of the vehicle and the low-voltage output assembly 104 of the vehicle.

In an embodiment, the first battery 101 of the on-board power supply 100 is the non-power battery of the vehicle, and the first voltage conversion apparatus 103 of the on-board power supply 100 includes an external voltage conversion apparatus 105. When the non-power battery of the vehicle is not detached from the vehicle, the first end of the second voltage conversion apparatus 206 is connected to the power battery assembly 201, and the second end of the second voltage conversion apparatus 206 is connected to the non-power battery of the vehicle.

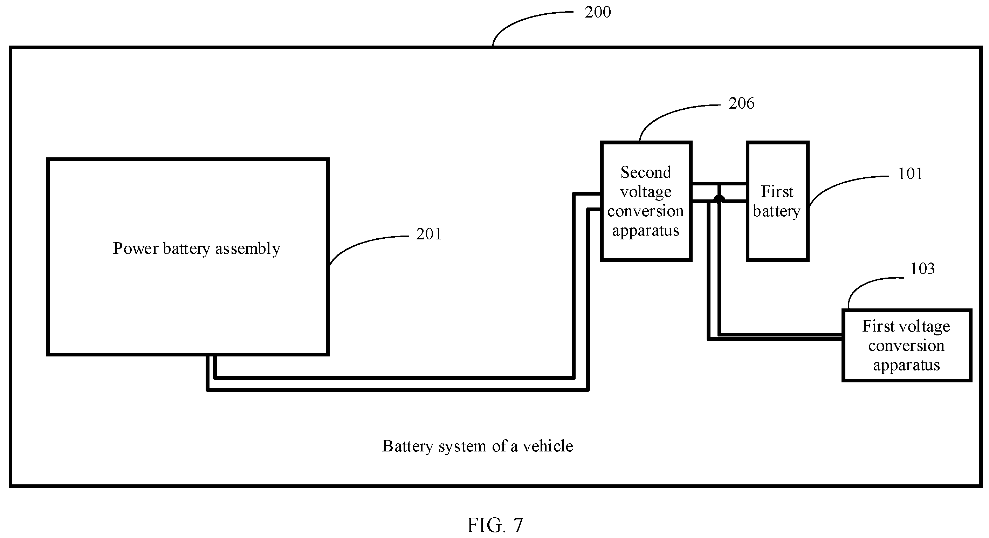

In an embodiment, the second voltage conversion apparatus 206 shown in FIG. 7 includes a high-voltage DC/low-voltage DC converter 113.

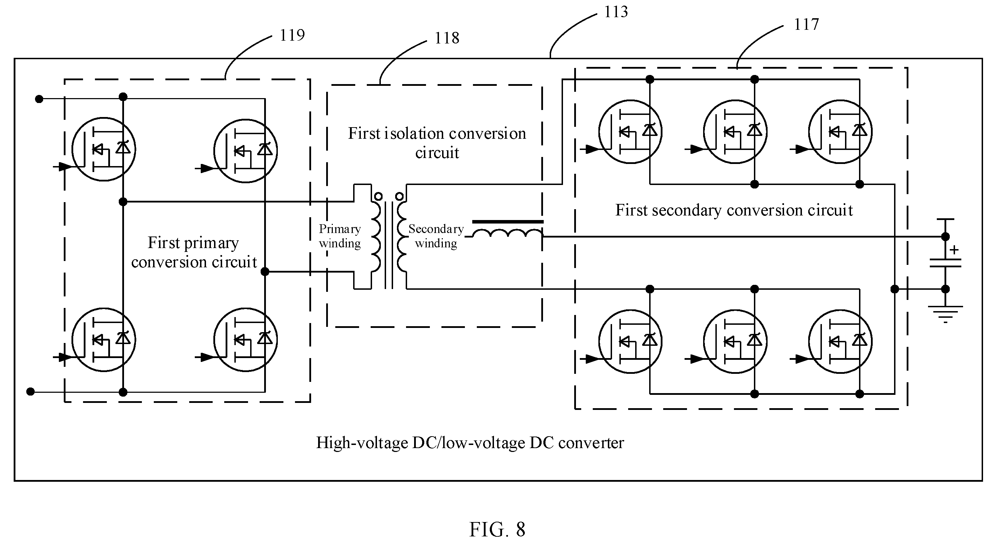

Refer to FIG. 8. The high-voltage DC/low-voltage DC converter 113 includes: a first primary conversion circuit 119, a first isolation conversion circuit 118, and a first secondary conversion circuit 117.

A first end of the first primary conversion circuit 119 is connected to the power battery assembly 201, a second end of the first primary conversion circuit 119 is connected to the first end of the first isolation conversion circuit 118, a second end of the first isolation conversion circuit 118 is connected to a first end of the first secondary conversion circuit 117, and a second end of the first secondary conversion circuit 117 is connected to the on-board power supply 100.

The first primary conversion circuit 119 is configured to: receive a direct current from the power battery assembly 201, convert the direct current into an alternating current, and transmit the alternating current to a primary winding of the first isolation conversion circuit 118. The first isolation conversion circuit 118 is configured to: receive the alternating current whose voltage value is a first voltage from the first primary conversion circuit 119 through the primary winding, generate an alternating current whose voltage value is a second voltage on a secondary winding, and transmit the generated alternating current to the first secondary conversion circuit 117. The first secondary conversion circuit 117 is configured to: receive the alternating current from the secondary winding, convert the alternating current into a direct current, and transmit the direct current to the on-board power supply 100.

In an embodiment, the battery system 200 of the vehicle further includes an alternating current-direct current conversion apparatus 112. A first end of the alternating current-direct current conversion apparatus 112 is connected to the power battery assembly 201, and a second end of the alternating current-direct current conversion apparatus 112 is connected to an alternating current electrical load.

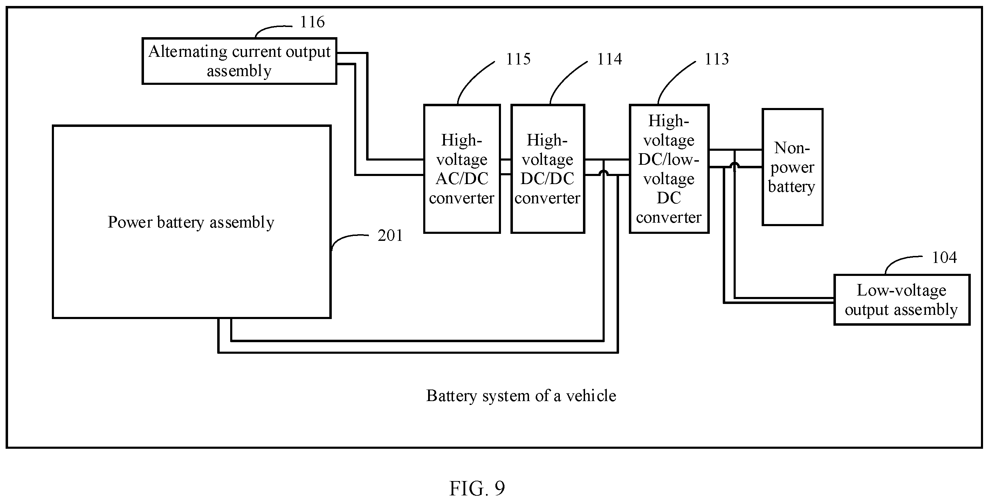

Refer to FIG. 9. The alternating current-direct current conversion apparatus 112 includes a high-voltage DC/DC converter 114, a high-voltage AC/DC converter 115, and an alternating current output assembly 116 that are sequentially connected. A first end of the high-voltage DC/DC converter 114 is connected to the power battery assembly 201, a second end of the high-voltage DC/DC converter 114 is connected to a first end of the high-voltage AC/DC converter 115, a second end of the high-voltage AC/DC converter 115 is connected to a first end of the alternating current output assembly 116, and a second end of the alternating current output assembly 116 is connected to the alternating current electrical load.

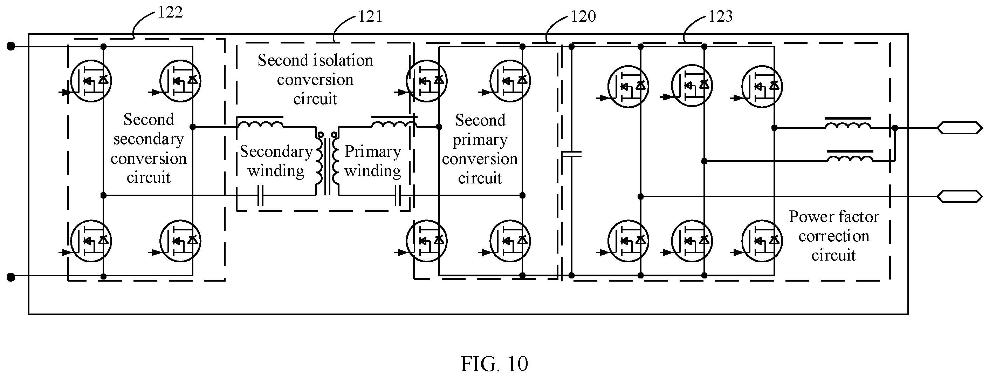

Refer to FIG. 10. The high-voltage DC/DC converter 114 includes a second secondary conversion circuit 120, a second isolation conversion circuit 121, and a second primary conversion circuit 122. The high-voltage AC/DC converter 115 includes a power factor correction circuit 123. The alternating current output assembly 116 includes a switch control circuit 106.

A first end of the second secondary conversion circuit 120 is connected to the power battery assembly 201, a second end of the second secondary conversion circuit 120 is connected to a first end of the second isolation conversion circuit 121, a second end of the second isolation conversion circuit 121 is connected to a first end of the second primary conversion circuit 122, a second end of the second primary conversion circuit 122 is connected to a first end of the power factor correction circuit 123, a second end of the power factor correction circuit 123 is connected to a first end of the switch control circuit 106, and the switch control circuit 106 is connected to the alternating current electrical load.

The second secondary conversion circuit 120 is configured to: receive a direct current from the power battery assembly 201, convert the direct current into an alternating current, and transmit the alternating current to a secondary winding of the second isolation conversion circuit 121. The second isolation conversion circuit 121 is configured to: receive the alternating current whose voltage value is a third voltage from the second secondary conversion circuit 120 through the secondary winding, generate an alternating current whose voltage value is a fourth voltage on a primary winding, and transmit the generated alternating current to the second primary conversion circuit 122. The second primary conversion circuit 122 is configured to: receive the alternating current from the primary winding, convert the alternating current into a direct current, and transmit the direct current to the power factor correction circuit 123. The power factor correction circuit 123 is configured to convert the received direct current from the second primary conversion circuit 122 into an alternating current. The alternating current from the power factor correction circuit 123 is transmitted to an alternating current electrical load connection through the switch control circuit 106 of the alternating current output assembly 116.

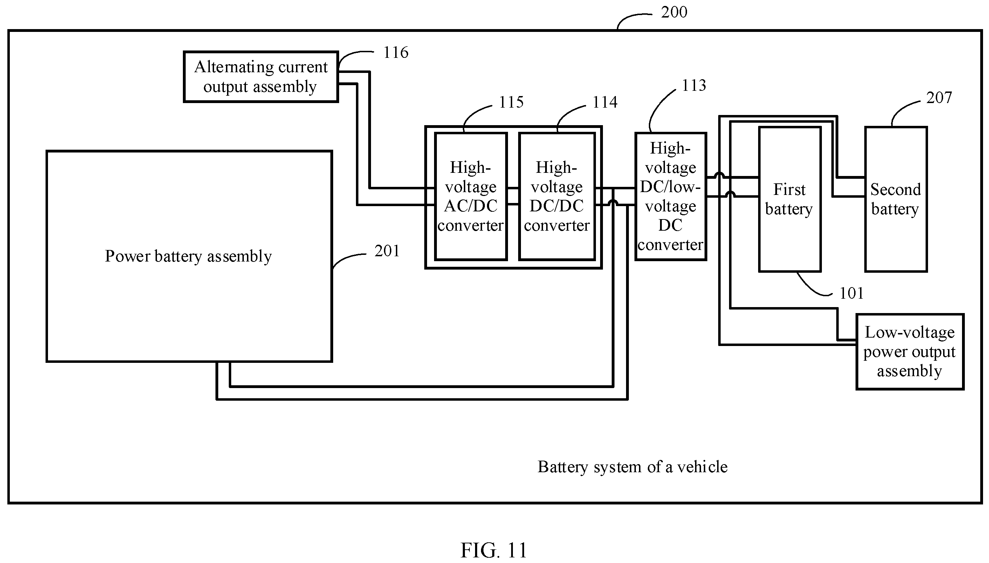

In an embodiment, refer to FIG. 11. The battery system 200 of the vehicle further includes a second battery 207. A first end of the second battery 207 is connected to the second voltage conversion apparatus 206, and a second end of the second battery 207 is adapted to be connected to a non-power load of the vehicle. The second battery 207 is configured to supply power to the non-power load of the vehicle when the on-board power supply 100 is in a detached state. This can ensure a power requirement of the non-power load of the vehicle when the on-board power supply 100 is in a detached state, without affecting running of the non-power load of the vehicle.

In this embodiment, refer to FIG. 11. When the first battery 101 is not detached from the vehicle, both the first battery 101 and the second battery 207 supply power to the non-power load of the vehicle. In another embodiment, when the first battery 101 is not detached from the vehicle, only the first battery 101 supplies power to the non-power load of the vehicle, and when the first battery 101 is detached from the vehicle, the second battery 207 supplies power to the non-power load of the vehicle.

In an embodiment, either of the first battery 101 and the second battery 207 may be detached from the vehicle, and form the on-board power supply 100 with the first voltage conversion apparatus 103.

The second battery 207 is at least one of a storage battery, an iron battery, and a supercapacitor.

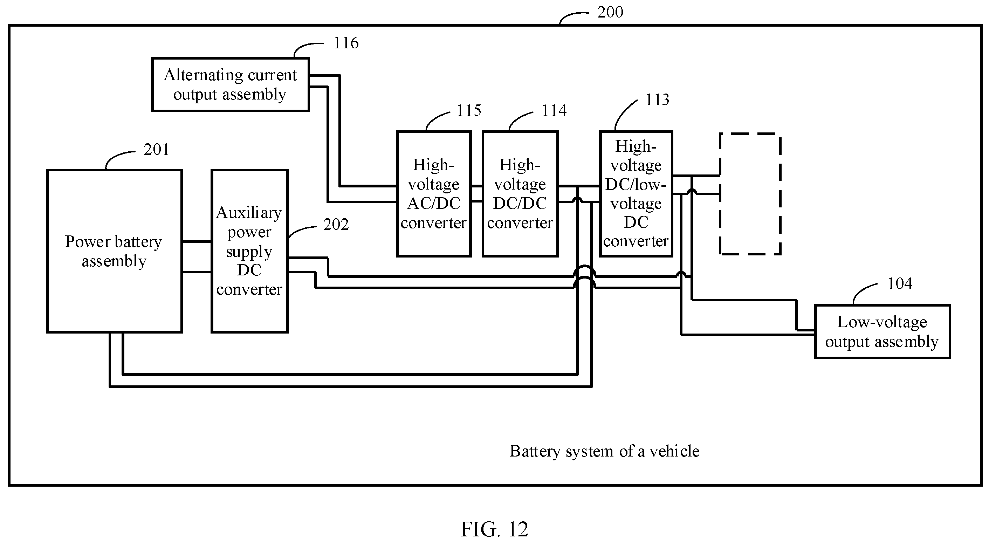

In an embodiment, refer to FIG. 12. The battery system 200 of the vehicle further includes an auxiliary power supply DC converter 202. When the on-board power supply 100 is in a detached state, a first end of the auxiliary power supply DC converter 202 is connected to the power battery assembly 201 through the switch control circuit 106, and a second end of the auxiliary power supply DC converter 202 is connected to the non-power load of the vehicle. The auxiliary power supply DC converter 202 is configured to work when the on-board power supply 100 is in a detached state, supplying power to the non-power load of the vehicle. This can ensure a power requirement of the non-power load of the vehicle when the on-board power supply 100 is in a detached state, without affecting running of the non-power load of the vehicle.

When the on-board power supply 100 is in an attached state, an electrical connection between the first end of the auxiliary power supply DC converter 202 and the power battery assembly 201 is in a disconnected state. When the on-board power supply 100 is in a detached state, a switch in the switch control circuit 106 is turned on, and the electrical connection is established between the first end of the auxiliary power supply DC converter 202 and the power battery assembly 201.

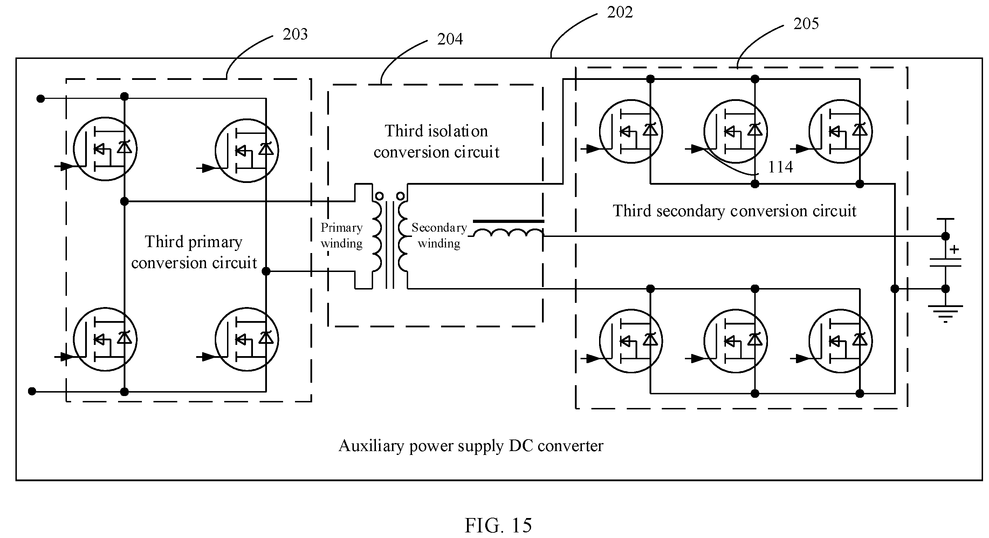

Refer to FIG. 15. The auxiliary power supply DC converter 202 includes a third primary conversion circuit 203, a third isolation conversion circuit 204, and a third secondary conversion circuit 205. For a specific schematic of a circuit of the auxiliary power supply DC converter 202, refer to FIG. 8 and FIG. 15.

A first end of the third primary conversion circuit 203 is connected to the power battery assembly 201, a second end of the third primary conversion circuit 203 is connected to a first end of the third isolation conversion circuit 204, a second end of the third isolation conversion circuit 204 is connected to a first end of the third secondary conversion circuit 205, and a second end of the third secondary conversion circuit 205 is connected to the non-power load of the vehicle.

The third primary conversion circuit 203 is configured to: receive a direct current from the power battery assembly 201, convert the direct current into an alternating current, and transmit the alternating current to a primary winding of the third isolation conversion circuit 204. The third isolation conversion circuit 204 is configured to: receive the alternating current whose voltage value is a fifth voltage from the third primary conversion circuit 203 through the primary winding, generate an alternating current whose voltage value is a sixth voltage on a secondary winding, and transmit the generated alternating current to the third secondary conversion circuit 205. The third secondary conversion circuit 205 is configured to: receive the alternating current from the secondary winding, convert the alternating current into a direct current, and transmit the direct current to the non-power load of the vehicle.

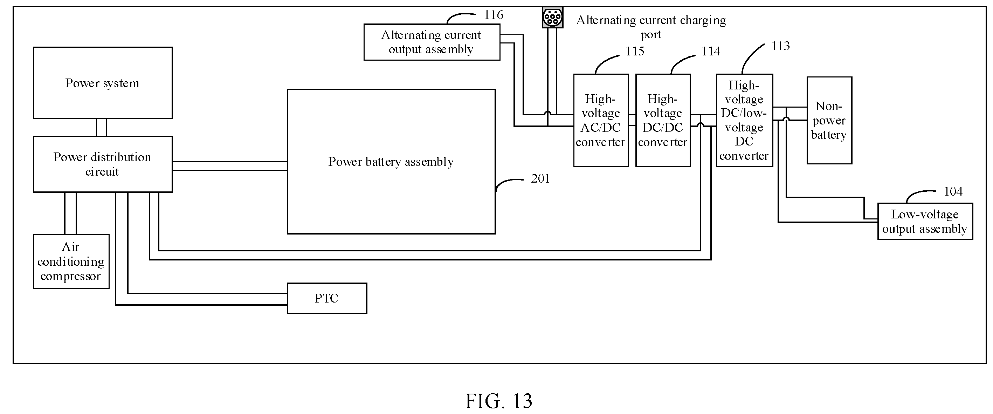

FIG. 13 is another diagram of a battery system 200 of a vehicle. Refer to FIG. 13. The battery system 200 of the vehicle includes a power battery assembly 201, a power distribution circuit, a second voltage conversion apparatus 206, an alternating current-direct current conversion apparatus 112, a non-power battery, and a first voltage conversion apparatus 103.

A first end of the second voltage conversion apparatus 206 is connected to the power battery assembly 201 through the power distribution circuit, and a second end of the second voltage conversion apparatus 206 is connected to the non-power battery. The second end of the second voltage conversion apparatus 206 is further connected to a first end of the first voltage conversion apparatus 103. The non-power battery is connected to the first end of the first voltage conversion apparatus 103. A second end of the first voltage conversion apparatus 103 is connected to a non-power load of the vehicle.

A first end of the alternating current-direct current conversion apparatus 112 is connected to the power battery assembly 201 through the power distribution circuit, and a second end of the alternating current-direct current conversion apparatus 112 is connected to an alternating current electrical load.

The first voltage conversion apparatus 103 includes a low-voltage output assembly 104. The low-voltage output assembly 104 includes a switch control circuit 106 and a voltage conversion circuit 107. A first end of the switch control circuit 106 is connected to the non-power battery. A first end of the voltage conversion circuit 107 is connected to a second end of the switch control circuit 106. A second end of the voltage conversion circuit 107 is connected to the non-power load of the vehicle.

The second voltage conversion apparatus 206 includes a high-voltage DC/low-voltage DC converter 113. For a specific schematic of a circuit of the high-voltage DC/low-voltage DC converter 113, refer to FIG. 8.

The alternating current-direct current conversion apparatus 112 includes a high-voltage DC/DC converter 114, a high-voltage AC/DC converter 115, and an alternating current output assembly 116. For a specific schematic of a circuit of the high-voltage DC/DC converter 114 and high-voltage AC/DC converter 115, refer to FIG. 10. The alternating current output assembly 116 includes a switch control circuit 106.

The power distribution circuit includes at least one fuse and at least one control switch.

The power battery assembly 201 supplies power to the non-power load of the vehicle through the power distribution circuit, the second voltage conversion apparatus 206, and the first voltage conversion apparatus 103.

The power battery assembly 201 outputs a high-voltage alternating current through the power distribution circuit and alternating current-direct current conversion apparatus 112, to supply power to the alternating current electrical load. The high-voltage alternating current is an alternating current within a high-voltage standard range, such as 220 V and 380 V.

The non-power battery may also supply power to the non-power load.

The power battery assembly 201 supplies power to a power system of the vehicle through the power distribution circuit. Specifically, the power battery assembly 201 outputs a high-voltage direct current to an inverter, and the inverter converts the high-voltage direct current into a high-voltage alternating current, to drive an alternating current motor to output torque.

The power battery supplies power to an air conditioning compressor, and a PTC (Positive Temperature Coefficient, positive temperature coefficient) heater through the power distribution circuit.

Refer to FIG. 13. An alternating current output from a charging device charges the power battery through an alternating current charging port by using the alternating current-direct current conversion apparatus 112.

With reference to FIG. 10, the power factor correction circuit 123 is configured to: receive an alternating current from the charging device, convert the alternating current into a direct current, and transmit the direct current to the second primary conversion circuit 122. The second primary conversion circuit 122 is configured to: receive the direct current from the power factor correction circuit 123, convert the direct current into an alternating current, and transmit the alternating current to the second isolation conversion circuit 121. The second isolation conversion circuit 121 is configured to: receive the alternating current whose voltage value is a first voltage from the second primary conversion circuit 122 through the primary winding, generate an alternating current whose voltage value is a second voltage on a secondary winding, and transmit the generated alternating current to the second secondary conversion circuit 120. The second secondary conversion circuit 120 is configured to: receive an alternating current from the secondary winding of the second isolation conversion circuit 121, convert the alternating current into a direct current, and transmit the direct current to the power battery assembly 201 through the power distribution circuit, to charge the power battery.

An alternating current output from the charging device charges the non-power battery through the alternating current charging port by using the alternating current-direct current conversion apparatus 112 and the voltage conversion apparatus.

With reference to FIG. 8 and FIG. 10, the power factor correction circuit 123 is configured to: receive the alternating current from the charging device, convert the alternating current into the direct current, and transmit the direct current to the second primary conversion circuit 122. The second primary conversion circuit 122 is configured to: receive the direct current from the power factor correction circuit 123, convert the direct current into an alternating current, and transmit the alternating current to the second isolation conversion circuit 121. The second isolation conversion circuit 121 is configured to: receive the alternating current whose voltage value is a first voltage from the second primary conversion circuit 122 through the primary winding, generate an alternating current whose voltage value is a second voltage on a secondary winding, and transmit the generated alternating current to the second secondary conversion circuit 120. The second secondary conversion circuit 120 is configured to: receive an alternating current from the secondary winding of the second isolation conversion circuit 121, convert the alternating current into a direct current, and transmit the direct current to the first primary conversion circuit 119 through the power distribution circuit. The first primary conversion circuit 119 is configured to: receive a direct current from the second secondary conversion circuit 120, convert the direct current into an alternating current, and transmit the alternating current to a primary winding of the first isolation conversion circuit 118. The first isolation conversion circuit 118 is configured to: receive the alternating current whose voltage value is a third voltage from the first primary conversion circuit 119 through the primary winding, generate an alternating current whose voltage value is a fourth voltage on a secondary winding, and transmit the generated alternating current to the first secondary conversion circuit 117. The first secondary conversion circuit 117 is configured to: receive the alternating current from the secondary winding, convert the alternating current into a direct current, and transmit the direct current to the non-power battery.

In an embodiment, the non-power battery and the first voltage conversion apparatus 103 are detached from the vehicle, and form the on-board power supply 100.

In an embodiment, the non-power battery is detached from the vehicle, and forms the on-board power supply 100 with the external voltage conversion apparatus 105.

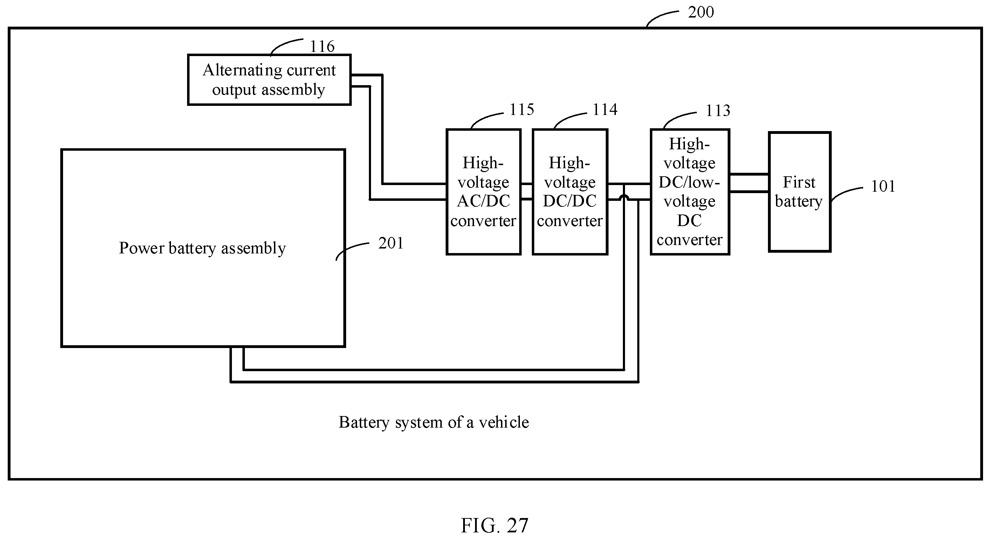

An embodiment of the present disclosure provides a battery system 200 of a vehicle. As shown in FIG. 27, the battery system 200 of the vehicle in this embodiment includes a power battery assembly 201 and the on-board power supply 100 provided in any one of the foregoing embodiments, and the power battery assembly 201 is connected to the first battery 101 through the high-voltage DC/low-voltage DC converter 113.

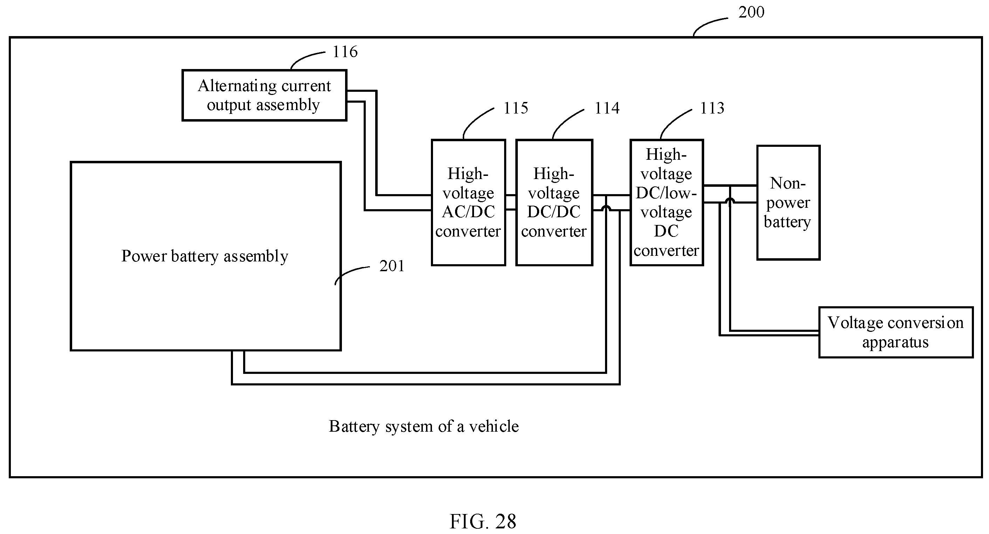

In an embodiment, refer to FIG. 28. The battery system 200 of the vehicle further includes a voltage conversion apparatus. A first end of the voltage conversion apparatus is connected to the first battery 101, and a second end of the voltage conversion apparatus is connected to a non-power load of the vehicle. The voltage conversion apparatus is configured to convert a voltage of the first battery 101 and output a direct current to the non-power load of the vehicle.

The voltage conversion apparatus includes a low-voltage output assembly 104. The low-voltage output assembly 104 includes a switch control circuit 106 and a voltage conversion circuit 107. A first end of the switch control circuit 106 is connected to the first battery 101. A first end of the voltage conversion circuit 107 is connected to a second end of the switch control circuit 106. A second end of the voltage conversion circuit 107 is adapted to be connected to a second external load.

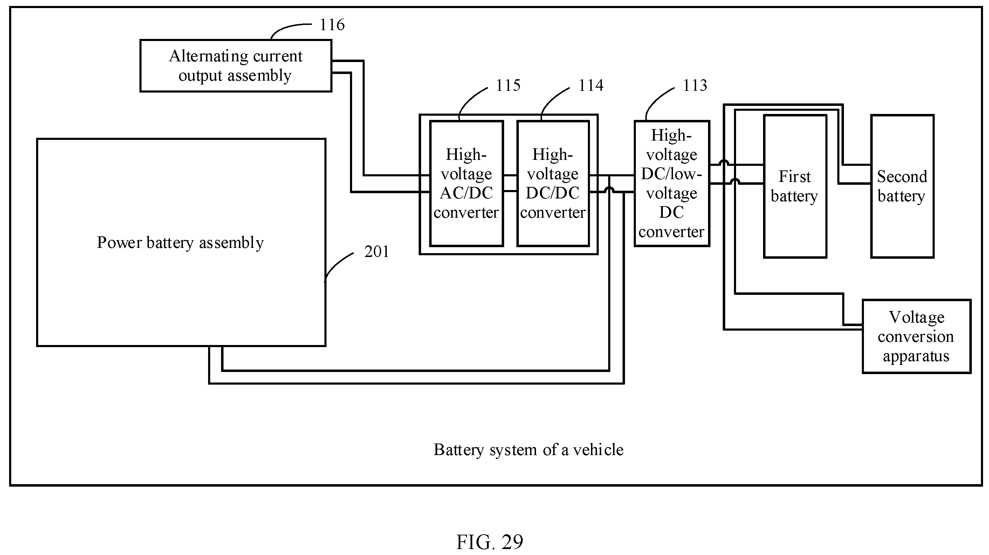

In an embodiment, refer to FIG. 29. The battery system 200 of the vehicle further includes a second battery 207. A first end of the second battery 207 is connected to an alternating current-direct current conversion apparatus 112, and a second end of the second battery 207 is adapted to be connected to the non-power load of the vehicle. The second battery 207 is configured to supply power to the non-power load of the vehicle when the on-board power supply 100 is in a detached state. This can ensure a power requirement of the non-power load of the vehicle when the on-board power supply 100 is in a detached state, without affecting running of the non-power load of the vehicle.

In this embodiment, refer to FIG. 29. When the first battery 101 is not detached from the vehicle, both the first battery 101 and the second battery 207 supply power to the non-power load of the vehicle. In another embodiment, when the first battery 101 is not detached from the vehicle, only the first battery 101 supplies power to the non-power load of the vehicle, and when the first battery 101 is detached from the vehicle, the second battery 207 supplies power to the non-power load of the vehicle.

In an embodiment, either of the first battery 101 and the second battery 207 may be detached from the vehicle, and form the on-board power supply 100 with the first voltage conversion apparatus 103.

The second battery 207 is at least one of a storage battery, an iron battery, and a supercapacitor.

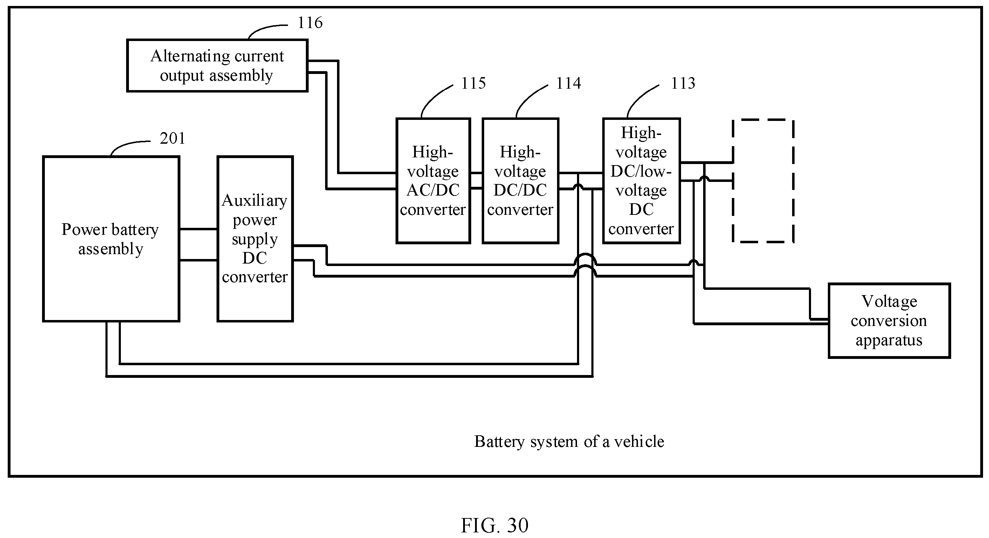

In an embodiment, refer to FIG. 30. The battery system 200 of the vehicle further includes an auxiliary power supply DC converter 202. A first end of the auxiliary power supply DC converter 202 is connected to the power battery assembly 201 through the switch control circuit 106, and a second end of the auxiliary power supply DC converter 202 is connected to the non-power load of the vehicle. The auxiliary power supply DC converter 202 is configured to supply power to the non-power load of the vehicle when the on-board power supply 100 is in a detached state. This can ensure a power requirement of the non-power load of the vehicle when the on-board power supply 100 is in a detached state, without affecting running of the non-power load of the vehicle.

When the on-board power supply 100 is in an attached state, an electrical connection between the first end of the auxiliary power supply DC converter 202 and the power battery assembly 201 is in a disconnected state. When the on-board power supply 100 is in a detached state, a switch in the switch control circuit 106 is turned on, and an electrical connection is established between the first end of the auxiliary power supply DC converter 202 and the power battery assembly 201.

The auxiliary power supply DC converter 202 includes a third primary conversion circuit 203, a third isolation conversion circuit 204, and a third secondary conversion circuit 205. For a schematic of a circuit of the auxiliary power supply DC converter 202, refer to the high-voltage DC/low-voltage DC converter 113 shown in FIG. 19.

A first end of the third primary conversion circuit 203 is connected to the power battery assembly 201, a second end of the third primary conversion circuit 203 is connected to a first end of the third isolation conversion circuit 204, a second end of the third isolation conversion circuit 204 is connected to a first end of the third secondary conversion circuit 205, and a second end of the third secondary conversion circuit 205 is connected to the non-power load of the vehicle.

The third primary conversion circuit 203 is configured to: receive a direct current from the power battery assembly 201, convert the direct current into an alternating current, and transmit the alternating current to a primary winding of the third isolation conversion circuit 204. The third isolation conversion circuit 204 is configured to: receive the alternating current whose voltage value is a fifth voltage from the third primary conversion circuit 203 through the primary winding, generate an alternating current whose voltage value is a sixth voltage on a secondary winding, and transmit the generated alternating current to the third secondary conversion circuit 205. The third secondary conversion circuit 205 is configured to: receive the alternating current from the secondary winding, convert the alternating current into a direct current, and transmit the direct current to the non-power load of the vehicle.

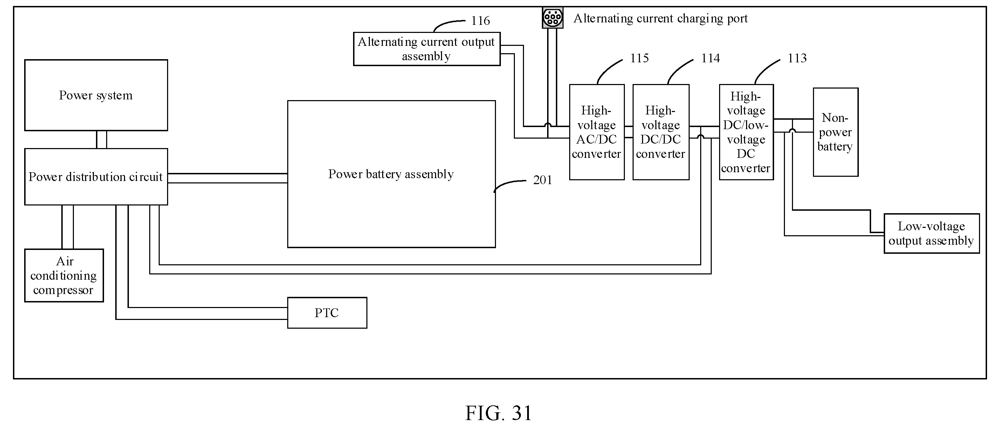

FIG. 31 is another diagram of a battery system 200 of a vehicle. Refer to FIG. 31. The battery system 200 of the vehicle includes a power battery assembly 201, a power distribution circuit, an alternating current-direct current conversion apparatus 112, a non-power battery, and a voltage conversion apparatus.

A first end of the alternating current-direct current conversion apparatus 112 is connected to the power battery assembly 201 through the power distribution circuit, and a second end of the alternating current-direct current conversion apparatus 112 is connected to an alternating current electrical load.

The voltage conversion apparatus includes a low-voltage output assembly 104. The low-voltage output assembly 104 includes a switch control circuit 106 and a voltage conversion circuit 107. A first end of the switch control circuit 106 is connected to the non-power battery. A first end of the voltage conversion circuit 107 is connected to a second end of the switch control circuit 106. A second end of the voltage conversion circuit 107 is connected to the non-power load of the vehicle.

The alternating current-direct current conversion apparatus 112 includes a high-voltage DC/low-voltage DC converter 113, a high-voltage DC/DC converter 114, a high-voltage AC/DC converter 115, and an alternating current output assembly 116. For a specific schematic of a circuit of the high-voltage DC/low-voltage DC converter 113, the high-voltage DC/DC converter 114, and the high-voltage AC/DC converter 115, refer to the foregoing embodiments. The alternating current output assembly 116 includes a switch control circuit 106.

The power distribution circuit includes at least one fuse and at least one control switch.

The power battery assembly 201 supplies power to the non-power load of the vehicle through the high-voltage DC/low-voltage DC converter 113 and the voltage conversion apparatus.

The power battery assembly 201 outputs a high-voltage alternating current through the high-voltage DC/DC converter 114, the high-voltage AC/DC converter 115, and the alternating current output assembly 116, to supply power to the alternating current electrical load. The high-voltage alternating current is an alternating current within a high-voltage standard range, such as 220 V and 380 V.

The non-power battery may also supply power to the non-power load.

The power battery assembly 201 supplies power to a power system of the vehicle through the power distribution circuit. Specifically, the power battery assembly 201 outputs a high-voltage direct current to an inverter, and the inverter converts the high-voltage direct current into a high-voltage alternating current, to drive an alternating current motor to output torque.

The power battery supplies power to an air conditioning compressor, and a PTC (Positive Temperature Coefficient, positive temperature coefficient) heater through the power distribution circuit.

Refer to FIG. 31. An alternating current output from the charging device charges the power battery through the alternating current charging port, the high-voltage AC/DC converter 115 and the high-voltage DC/DC converter 114.

With reference to FIG. 19, the power factor correction circuit 123 is configured to: receive an alternating current from the charging device, convert the alternating current into a direct current, and transmit the direct current to the second primary conversion circuit 122. The second primary conversion circuit 122 is configured to: receive the direct current from the power factor correction circuit 123, convert the direct current into an alternating current, and transmit the alternating current to the second isolation conversion circuit 121. The second isolation conversion circuit 121 is configured to: receive the alternating current whose voltage value is a first voltage from the second primary conversion circuit 122 through the primary winding, generate an alternating current whose voltage value is a second voltage on a secondary winding, and transmit the generated alternating current to the second secondary conversion circuit 120. The second secondary conversion circuit 120 is configured to: receive an alternating current from the secondary winding of the second isolation conversion circuit 121, convert the alternating current into a direct current, and transmit the direct current to the power battery assembly 201 through the power distribution circuit, to charge the power battery.

An alternating current output from the charging device charges the non-power battery through the alternating current charging port, the high-voltage AC/DC converter 115, the high-voltage DC/DC converter 114, and the high-voltage DC/low-voltage DC converter 113.

With reference to FIG. 19, the power factor correction circuit 123 is configured to: receive an alternating current from the charging device, convert the alternating current into a direct current, and transmit the direct current to the second primary conversion circuit 122. The second primary conversion circuit 122 is configured to: receive the direct current from the power factor correction circuit 123, convert the direct current into an alternating current, and transmit the alternating current to the second isolation conversion circuit 121. The second isolation conversion circuit 121 is configured to: receive the alternating current whose voltage value is a first voltage from the second primary conversion circuit 122 through the primary winding, generate an alternating current whose voltage value is a second voltage on a secondary winding, and transmit the generated alternating current to the second secondary conversion circuit 120. The second secondary conversion circuit 120 is configured to: receive an alternating current from the secondary winding of the second isolation conversion circuit 121, convert the alternating current into a direct current, and transmit the direct current to the first primary conversion circuit 119 through the power distribution circuit. The first primary conversion circuit 119 is configured to: receive a direct current from the second secondary conversion circuit 120, convert the direct current into an alternating current, and transmit the alternating current to a primary winding of the first isolation conversion circuit 118. The first isolation conversion circuit 118 is configured to: receive the alternating current whose voltage value is a third voltage from the first primary conversion circuit 119 through the primary winding, generate an alternating current whose voltage value is a fourth voltage on a secondary winding, and transmit the generated alternating current to the first secondary conversion circuit 117. The first secondary conversion circuit 117 is configured to: receive the alternating current from the secondary winding, convert the alternating current into a direct current, and transmit the direct current to the non-power battery.

### <Embodiments of a vehicle>

An embodiment of the present disclosure provides a vehicle, including the battery system 200 of the vehicle in any of the above embodiments.

Embodiments in this specification are all described in a progressive manner. For same or similar parts in embodiments, refer to these embodiments. Each embodiment focuses on a difference from other embodiments. For a related description of an embodiment of an electric vehicle, refer to partial descriptions of the method embodiment.

Specific embodiments of this specification are described above. Other embodiments are within the scope of the following claims. In some cases, the actions or steps described in the claims may be performed in an order different from the order in embodiments and may still achieve a desired result. In addition, a process described in the accompanying drawings does not require a particular order or a sequential order shown to achieve the desired result. In some implementations, multi-task processing and parallel processing are possible or may be advantageous.

Embodiments of this specification may be a system, a method, and/or a computer program product. The computer program product may include a computer-readable storage medium carrying computer instructions that are used to enable a processor to implement various aspects of embodiments of this specification.

The computer-readable storage medium can be a tangible device that can retain and store instructions for use by a computer instruction execution device. The computer-readable storage medium may be, for example, but is not limited to, an electronic storage device, a magnetic storage device, an optical storage device, an electromagnetic storage device, a semiconductor storage device, or any suitable combination thereof. More specific examples (a non-exhaustive list) of the computer-readable storage medium include: a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanical encoded device such as a punched card or a groove protrusion structure storing computer instructions on the punched card or the groove protrusion structure, and any suitable combination thereof. The computer-readable storage medium used herein is not to be construed as a transient signal, for example, a radio wave or another freely propagating electromagnetic wave, an electromagnetic wave propagating through a waveguide or another transmission medium (for example, a light pulse through an optical fiber cable), or an electrical signal transmitted through a wire.

The computer instructions described herein may be downloaded from the computer-readable storage medium to respective computing/processing devices or to an external computer or external storage device through a network, for example, the internet, a local area network, a wide area network, and/or a wireless network. The network may include a copper transmission cable, optical fiber transmission, wireless transmission, a router, a firewall, a switch, a gateway computer, and/or an edge server. A network adapter card or network interface in each computing/processing device receives the computer instructions from the network and forwards the computer instructions for storage in a computer-readable storage medium in each computing/processing device.

The flowcharts and block diagrams in the accompanying drawings show possible implementations of system architectures, functions, and operations of systems, methods, and computer program products according to a plurality of embodiments of this specification. In this regard, each block in the flowcharts or block diagrams may represent a module, a program segment, or a part of the computer instructions, and the module, the program segment, or the part of the computer instructions includes one or more executable computer instructions for implementing a specified logical function. In some alternative implementations, a function marked in the block may also occur in a sequence different from that marked in the accompanying drawings. For example, two consecutive blocks may actually be executed substantially in parallel, and may sometimes be executed in a reverse order, depending on a function. It should also be noted that each block in the block diagrams and/or flowcharts, and a combination of blocks in the block diagrams and/or flowcharts may be implemented by special purpose hardware-based systems that perform a specified function or act, or may be implemented by combinations of special purpose hardware and computer instructions. It is well known to a person skilled in the art that implementation by hardware, implementation by software, and implementation by a combination of software and hardware are all equivalent.

The foregoing has described embodiments of this specification. The foregoing descriptions are examples, not exhaustive, and are not limited to the disclosed embodiments. Without departing from the scope of the described embodiments, many modifications and variations are clear to a person of ordinary skill in the technical field. Selection of terms used in this specification is intended to best describe principles of embodiments, actual applications, or improvements to technologies in the market, or to enable another person of ordinary skill in the art to understand embodiments disclosed in this specification.

## Claims

1. An on-board power supply (100), wherein at least a part of apparatuses of the on-board power supply (100) are detachably connected to a vehicle, and the on-board power supply (100) comprises:
a first battery (101), the first battery (101) being a non-power battery of the vehicle, and the first battery (101) being configured to supply power to an external load when in a detached state; and
an electrical energy conversion apparatus (102), a first end of the electrical energy conversion apparatus (102) being connected to the first battery (101); a second end of the electrical energy conversion apparatus (102) being adapted to be connected to the external load; and in the on-board power supply (100), the electrical energy conversion apparatus (102) being configured to convert electrical energy from the first battery (101) to supply power to the external load.

2. The on-board power supply (100) according to claim 1, wherein the external load comprises a first external load; the electrical energy conversion apparatus (102) comprises a first voltage conversion apparatus (103); a first end of the first voltage conversion apparatus (103) is connected to the first battery (101); a second end of the first voltage conversion apparatus (103) is adapted to be connected to the first external load; and in the on-board power supply (100), the first voltage conversion apparatus (103) is configured to convert a voltage of the first battery (101) and output a direct current to the first external load.

3. The on-board power supply (100) according to claim 2, wherein the first voltage conversion apparatus (103) comprises a low-voltage output assembly (104) of the vehicle, a first end of the low-voltage output assembly (104) of the vehicle is connected to the first battery (101), and a second end of the low-voltage output assembly (104) of the vehicle is adapted to be detachably connected to a non-power load of the vehicle.

4. The on-board power supply (100) according to claim 2 or 3, wherein the first voltage conversion apparatus (103) comprises an external voltage conversion apparatus (105), a first end of the external voltage conversion apparatus (105) is connected to the first battery (101), and a second end of the external voltage conversion apparatus (105) is adapted to be connected to the first external load.

5. The on-board power supply (100) according to any one of claims 2 to 4, wherein the first voltage conversion apparatus (103) comprises:
a switch control circuit (106), a first end of the switch control circuit (106) being connected to the first battery (101); and
a voltage conversion circuit (107), a first end of the voltage conversion circuit (107) being connected to a second end of the switch control circuit (106), and a second end of the voltage conversion circuit (107) being adapted to be connected to the first external load.

6. The on-board power supply (100) according to any one of claims 2 to 5, wherein the first battery (101) is at least one of a storage battery, an iron battery, and a supercapacitor.

7. The on-board power supply (100) according to any one of claims 2 to 6, wherein the on-board power supply (100) further comprises a storage compartment (108), and the first battery (101) and the first voltage conversion apparatus (103) are accommodated in the storage compartment (108).

8. The on-board power supply (100) according to claim 7, wherein the storage compartment (108) is provided with a locking mechanism (109), and the locking mechanism (109) is configured to open when an electrical connection between the on-board power supply (100) and the vehicle is disconnected, to allow detachment of the on-board power supply (100).

9. The on-board power supply (100) according to claim 7 or 8, wherein the storage compartment (108) is provided with a low-voltage output interface (110), and the second end of the first voltage conversion apparatus (103) is connected to the low-voltage output interface (110) to output a direct current.

10. The on-board power supply (100) according to any one of claims 7 to 9, wherein the storage compartment (108) is further provided with an electrical connection interface (111), the first battery (101) is connected to the electrical connection interface (111), and the first battery (101) is adapted to be electrically connected to the vehicle through the electrical connection interface (111).

11. The on-board power supply (100) according to any one of claims 1 to 10, wherein the onboard load comprises a second external load; the electrical energy conversion apparatus (102) comprises an alternating current-direct current conversion apparatus (112); a first end of the alternating current-direct current conversion apparatus (112) is connected to the first battery (101); a second end of the alternating current-direct current conversion apparatus (112) is adapted to be connected to the second external load; and in the on-board power supply (100), the alternating current-direct current conversion apparatus (112) is configured to convert a direct current from the first battery (101) into an alternating current for the second external load.

12. The on-board power supply (100) according to claim 11, wherein the alternating current-direct current conversion apparatus (112) is an alternating current-direct current conversion apparatus (112) of the vehicle; the alternating current-direct current conversion apparatus (112) of the vehicle comprises: a high-voltage DC/low-voltage DC converter (113), a high-voltage DC/DC converter (114), a high-voltage AC/DC converter (115), and an alternating current output assembly (116) that are sequentially connected; and the high-voltage DC/low-voltage DC converter (113), the high-voltage DC/DC converter (114), the high-voltage AC/DC converter (115), and the alternating current output assembly (116) are all vehicle apparatuses removable from the vehicle.

13. The on-board power supply (100) according to claim 11 or 12, wherein the alternating current-direct current conversion apparatus (112) comprises the high-voltage DC/low-voltage DC converter (113), the high-voltage DC/DC converter (114), the high-voltage AC/DC converter (115), and the alternating current output assembly (116) that are sequentially connected; and
the high-voltage DC/low-voltage DC converter (113), the high-voltage DC/DC converter (114), and the high-voltage AC/DC converter (115) are all vehicle apparatuses removable from the vehicle; and the alternating current output assembly (116) is an external apparatus.

14. The on-board power supply (100) according to claim 12 or 13, wherein the high-voltage DC/low-voltage DC converter (113) comprises a first secondary conversion circuit (117), a first isolation conversion circuit (118), and a first primary conversion circuit (119);
the high-voltage DC/DC converter (114) comprises a second secondary conversion circuit (120), a second isolation conversion circuit (121), and a second primary conversion circuit (122);
the high-voltage AC/DC converter (115) comprises a power factor correction circuit (123);
the alternating current output assembly (116) comprises the switch control circuit (106); and
a first end of the first secondary conversion circuit (117) is connected to the first battery (101), a second end of the first secondary conversion circuit (117) is connected to a first end of the first isolation conversion circuit (118), a second end of the first isolation conversion circuit (118) is connected to a first end of the first primary conversion circuit (119), a second end of the first primary conversion circuit (119) is connected to a first end of the second secondary conversion circuit (120), a second end of the second secondary conversion circuit (120) is connected to a first end of the second isolation conversion circuit (121), a second end of the second isolation conversion circuit (121) is connected to a first end of the second primary conversion circuit (122), a second end of the second primary conversion circuit (122) is connected to a first end of the power factor correction circuit (123), a second end of the power factor correction circuit (123) is connected to the first end of the switch control circuit (106), and the second end of the switch control circuit (106) is adapted to be connected to the second external load.

15. The on-board power supply (100) according to any one of claims 11 to 14, wherein the alternating current-direct current conversion apparatus (112) comprises the high-voltage DC/low-voltage DC converter (113), the high-voltage AC/DC converter (115), and the alternating current output assembly (116) that are sequentially connected; and
the high-voltage DC/low-voltage DC converter (113), the high-voltage AC/DC converter (115), and the alternating current output assembly (116) are all vehicle apparatuses removable from the vehicle.

16. The on-board power supply (100) according to claim 15, wherein the high-voltage DC/low-voltage DC converter (113) comprises the first secondary conversion circuit (117), the first isolation conversion circuit (118), and the first primary conversion circuit (119) that are sequentially connected;
the high-voltage AC/DC converter (115) comprises the power factor correction circuit (123);
the alternating current output assembly (116) comprises the switch control circuit (106); and
the first end of the first secondary conversion circuit (117) is connected to the first battery (101), the second end of the first secondary conversion circuit (117) is connected to the first end of the first isolation conversion circuit (118), the second end of the first isolation conversion circuit (118) is connected to the first end of the first primary conversion circuit (119), the second end of the first primary conversion circuit (119) is connected to the first end of the power factor correction circuit (123), the second end of the power factor correction circuit (123) is connected to the first end of the switch control circuit (106), and the second end of the switch control circuit (106) is adapted to be connected to the second external load.

17. The on-board power supply (100) according to any one of claims 11 to 16, wherein the alternating current-direct current conversion apparatus (112) comprises the high-voltage DC/low-voltage DC converter (113) and a high-voltage DC/AC converter that are connected to each other;
the high-voltage DC/low-voltage DC converter (113) is a vehicle apparatus removable from the vehicle, and the high-voltage DC/AC converter is an external apparatus; and
a first end of the high-voltage DC/low-voltage DC converter (113) is connected to the first battery (101), a second end of the high-voltage DC/low-voltage DC converter (113) is connected to a first end of the high-voltage DC/AC converter, and a second end of the high-voltage DC/AC converter is connected to the second external load.

18. The on-board power supply (100) according to any one of claims 11 to 17, wherein the alternating current-direct current conversion apparatus (112) comprises the high-voltage DC/low-voltage DC converter (113), the high-voltage DC/AC converter, and the alternating current output assembly (116) that are connected to each other;
the high-voltage DC/low-voltage DC converter (113) is a vehicle apparatus removable from the vehicle, and the high-voltage DC/AC converter and the alternating current output assembly (116) are both external apparatuses; and
the first end of the high-voltage DC/low-voltage DC converter (113) is connected to the first battery (101), the second end of the high-voltage DC/low-voltage DC converter (113) is connected to the first end of the high-voltage DC/AC converter, the second end of the high-voltage DC/AC converter is connected to a first end of the alternating current output assembly (116), and a second end of the alternating current output assembly (116) is connected to the second external load.

19. The on-board power supply (100) according to any one of claims 11 to 18, wherein the alternating current-direct current conversion apparatus (112) is an external alternating current-direct current conversion apparatus (112), and the external alternating current-direct current conversion apparatus (112) comprises the high-voltage DC/AC converter or a low-voltage DC/AC converter;
the first end of the high-voltage DC/AC converter is connected to the first battery (101), and the second end of the high-voltage DC/AC converter is connected to the second external load; and
a first end of the low-voltage DC/AC converter is connected to the first battery (101), and a second end of the low-voltage DC/AC converter is connected to the second external load.

20. The on-board power supply (100) according to any one of claims 11 to 19, wherein the first battery (101) is at least one of a storage battery, an iron battery, and a supercapacitor.

21. The on-board power supply (100) according to any one of claims 11 to 20, wherein the on-board power supply (100) further comprises the storage compartment (108), and the first battery (101) and the alternating current-direct current conversion apparatus (112) are accommodated in the storage compartment (108).

22. The on-board power supply (100) according to any one of claims 11 to 21, wherein the storage compartment (108) is provided with the locking mechanism (109), and the locking mechanism (109) is configured to open when the electrical connection between the on-board power supply (100) and the vehicle is disconnected, to allow detachment of the on-board power supply (100).

23. The on-board power supply (100) according to claim 21, wherein the storage compartment (108) is provided with an alternating current output interface, and the second end of the alternating current-direct current conversion apparatus (112) is connected to the alternating current output interface to output an alternating current.

24. The on-board power supply (100) according to claim 21, wherein the storage compartment (108) is further provided with the electrical connection interface (111), the first battery (101) is connected to the electrical connection interface (111), and the first battery (101) is adapted to be electrically connected to the vehicle through the electrical connection interface (111).

25. A battery system (200) of a vehicle, comprising:
a power battery assembly (201); and
the on-board power supply (100) according to any one of claims 1 to 24.

26. The battery system (200) according to claim 25, further comprising:
a second voltage conversion apparatus (206), a first end of the second voltage conversion apparatus (206) being connected to the power battery assembly (201) and being configured to convert a voltage output by the power battery assembly (201); and
the on-board power supply (100) being connected to a second end of the second voltage conversion apparatus (206).

27. The battery system (200) according to claim 26, wherein the second voltage conversion apparatus (206) comprises:
the high-voltage DC/low-voltage DC converter (113), the high-voltage DC/low-voltage DC converter (113) comprising the first primary conversion circuit (119), the first isolation conversion circuit (118), and the first secondary conversion circuit (117); and
the first end of the first primary conversion circuit (119) being connected to the power battery assembly (201), the second end of the first primary conversion circuit (119) being connected to the first end of the first isolation conversion circuit (118), the second end of the first isolation conversion circuit (118) being connected to the first end of the first secondary conversion circuit (117), and the second end of the first secondary conversion circuit (117) being connected to the on-board power supply (100).

28. The battery system (200) according to claim 26 or 27, wherein the battery system (200) further comprises:
the alternating current-direct current conversion apparatus (112), the first end of the alternating current-direct current conversion apparatus (112) being connected to the power battery assembly (201), and the second end of the alternating current-direct current conversion apparatus (112) being connected to an alternating current electrical load; and
the alternating current-direct current conversion apparatus (112) comprising the high-voltage DC/DC converter (114), the high-voltage AC/DC converter (115), and the alternating current output assembly (116) that are sequentially connected.

29. The battery system (200) according to claim 28, wherein the high-voltage DC/DC converter (114) comprises the second secondary conversion circuit (120), the second isolation conversion circuit (121), and the second primary conversion circuit (122);
the high-voltage AC/DC converter (115) comprises the power factor correction circuit (123);
the alternating current output assembly (116) comprises the switch control circuit (106); and
the first end of the second secondary conversion circuit (120) is connected to the power battery assembly (201), the second end of the second secondary conversion circuit (120) is connected to the first end of the second isolation conversion circuit (121), the second end of the second isolation conversion circuit (121) is connected to the first end of the second primary conversion circuit (122), the second end of the second primary conversion circuit (122) is connected to the first end of the power factor correction circuit (123), the second end of the power factor correction circuit (123) is connected to the first end of the switch control circuit (106), and the switch control circuit (106) is connected to the alternating current electrical load.

30. The battery system (200) according to any one of claims 26 to 29, wherein the battery system (200) further comprises:
a second battery (207), a first end of the second battery (207) being connected to the second voltage conversion apparatus (206), a second end of the second battery (207) being adapted to be connected to the non-power load of the vehicle, and the second battery (207) being configured to supply power to the non-power load of the vehicle when the on-board power supply (100) is in a detached state.

31. The battery system (200) according to any one of claims 26 to 30, wherein the battery system (200) further comprises:
an auxiliary power supply DC converter (202), a first end of the auxiliary power supply DC converter (202) being connected to the power battery assembly (201) through the switch control circuit (106); a second end of the auxiliary power supply DC converter (202) being connected to the non-power load of the vehicle; and the auxiliary power supply DC converter (202) being configured to supply power to the non-power load of the vehicle when the on-board power supply (100) is in a detached state.

32. The battery system (200) according to claim 31, wherein the auxiliary power supply DC converter (202) comprises a third primary conversion circuit (203), a third isolation conversion circuit (204), and a third secondary conversion circuit (205), wherein
a first end of the third primary conversion circuit (203) is connected to the power battery assembly (201), a second end of the third primary conversion circuit (203) is connected to a first end of the third isolation conversion circuit (204), a second end of the third isolation conversion circuit (204) is connected to a first end of the third secondary conversion circuit (205), and a second end of the third secondary conversion circuit (205) is connected to the non-power load of the vehicle.

33. The battery system (200) according to claim 25, wherein the power battery assembly (201) is connected to the first battery (101) through the high-voltage DC/low-voltage DC converter (113).

34. The battery system (200) according to claim 33, wherein the battery system (200) further comprises:
a second battery (207), a first end of the second battery (207) being connected to the alternating current-direct current conversion apparatus (112), a second end of the second battery (207) being adapted to be connected to the non-power load of the vehicle, and the second battery (207) being configured to supply power to the non-power load of the vehicle when the on-board power supply (100) is in a detached state.

35. The battery system (200) according to claim 33 or 34, wherein the battery system (200) further comprises:
an auxiliary power supply DC converter (202), a first end of the auxiliary power supply DC converter (202) being connected to the power battery assembly (201) through the switch control circuit (106); a second end of the auxiliary power supply DC converter (202) being connected to the non-power load of the vehicle; and the auxiliary power supply DC converter (202) being configured to supply power to the non-power load of the vehicle when the on-board power supply (100) is in a detached state.

36. The battery system (200) according to claim 35, wherein the auxiliary power supply DC converter (202) comprises a third primary conversion circuit (203), a third isolation conversion circuit (204), and a third secondary conversion circuit (205), wherein
a first end of the third primary conversion circuit (203) is connected to the power battery assembly (201), a second end of the third primary conversion circuit (203) is connected to a first end of the third isolation conversion circuit (204), a second end of the third isolation conversion circuit (204) is connected to a first end of the third secondary conversion circuit (205), and a second end of the third secondary conversion circuit (205) is connected to the non-power load of the vehicle.

37. A vehicle, comprising the battery system (200) according to any one of claims 25 to 36.
